# EUROPEAN PATENT APPLICATION

(11) **EP 4 561 000 A1**
(43) Date of publication of application: **28.05.2025**
(21) Application number: 23853955.5
(22) Date of filing: 28.04.2023
(51) Int. Cl.: H04L 27/00, H04L 9/32, H04W 12/00

(54) **COMMUNICATION METHOD AND APPARATUS, AND SYSTEM**

(30) Priority: 15.08.2022 WO PCT/CN2022/112474
(71) Applicant: Shenzhen Yinwang Intelligent Technologies Co., Ltd., Shenzhen, Guangdong 518129 (CN)
(72) Inventor: YASMIN, Rehana, Shenzhen, Guangdong 518129 (CN); MA, Jianzhong, Shenzhen, Guangdong 518129 (CN); FU, Tianfu, Shenzhen, Guangdong 518129 (CN); WEI, Zhuo, Shenzhen, Guangdong 518129 (CN); YANG, Yanjiang, Shenzhen, Guangdong 518129 (CN)
(74) Representative: Thun, Clemens
(86) International application number: PCT/CN2023/091790
(87) International publication number: WO 2024/037048

(57) **Abstract**

This application provides a communication method, apparatus, and system. The method may include: A first node receives a first message from a first device, where the first message includes second node information, and the second node information indicates a second node; the first node determines the second node based on the second node information; the first node generates a security key between the first node and the second node; and the first node communicates with the second node based on the security key. The communication method provided in this application helps ensure confidentiality and integrity of communication data without introducing an external connection.

## Description

This application claims priority to PCT International Application No. PCT/CN2022/112474, filed with the China National Intellectual Property Administration on August 15, 2022 and entitled "COMMUNICATION METHOD, APPARATUS, AND SYSTEM", which is incorporated herein by reference in its entirety.

### TECHNICAL FIELD

This application relates to the security field, and more specifically, to a communication method, apparatus, and system.

### BACKGROUND

Electronic control units (electronic control units, ECUs) and/or electronic control modules (electronic control modules, ECMs) are embedded systems in electronic devices of a vehicle, and are configured to control one or more electrical systems or subsystems in the vehicle.

Vehicle-mounted control units need to communicate with each other to perform vehicle operations. Communication content includes key operations that affect vehicle security. Manipulating the communication content may cause serious consequences, and in the worst case, a user in the vehicle or another user is deprived of life. Therefore, an encryption key usually needs to be injected into two vehicle-mounted control units that have a communication requirement, so that the two communication parties encrypt communication content. However, this communication method is not secure enough.

### SUMMARY

This application provides a communication method and apparatus, to improve communication security between communication nodes.

According to a first aspect, a communication method is provided. The method may be performed by a control unit or a control module in a vehicle, or may be performed by a chip or a circuit used in a control unit or a control module of a vehicle. This is not limited in this application.

The method may include: A first node receives a first message from a first device, where the first message includes second node information, and the second node information indicates a second node; the first node determines the second node based on the second node information; the first node generates a security key between the first node and the second node; and the first node communicates with the second node based on the security key.

In some possible implementations, the first node receives the first message from the first device, where the first message includes the second node information, and the second node information indicates the second node and indicates that the first node communicates with the second node.

In some possible implementations, the first node receives, through one or more devices, the first message sent by the first device. For example, the first node receives, through an electrical inspection device, the first message sent by the first device.

In some possible implementations, the first node and the second node may be nodes in a first terminal. For example, the first terminal may be a vehicle, or may be another terminal device.

It should be understood that the first node may learn, by using the first message, which second node the first node needs to communicate with.

In some possible implementations, the first node may be a device having security hardware, for example, a zone controller (zone controller, ZC), a telecommunication unit (telecommunication unit, TCU), an in-vehicle infotainment (in-vehicle infotainment, IVI), or an advanced driver assistant system (advanced driver assistant system, ADAS); and the second node may be a device having security hardware, for example, a ZC, a TCU, an IVI, or an ADAS in the foregoing embodiments, or may be a device having security hardware, for example, electric power steering (electric power steering, EPS) or an electric parking brake (electric parking brake, EPB). For example, the first node and the second node may be connected through an Ethernet cable, or may be connected through a controller area network-flexible data (controller area network-flexible data, CAN-FD) cable.

In some possible implementations, the first node may be a layer-0 device, and the second node may be a layer-0 device or a layer-1 device.

In some possible implementations, the first message may further include identity identification information of the first terminal. The identity identification information of the first terminal may be a vehicle identification number (vehicle identification number, VIN), or may be other information that can indicate an identity of the first terminal. This is not specifically limited in this application.

It should be understood that the first node and the second node may alternatively be other components that need to communicate in a terminal device.

In some possible implementations, the first message may be a signed trust credential, and the signed trust credential may be in a form of a table or a file (file) or in another form. This is not specifically limited in embodiments of this application.

In some possible implementations, the first device may be an OEM PKI server, or may be a computing platform in the first terminal, for example, at least one of a vehicle domain controller (vehicle domain controller, VDC), a mobile data center (mobile data center, MDC), and a chassis domain controller (chassis domain controller, CDC), or may be another trusted device, for example, a vehicle control server ICAS 1, an intelligent driving server ICAS 2, an infotainment server ICAS 3, a body domain controller (body domain controller, BDC), or a special equipment system (special equipment system, SAS), a media graphics unit (media graphics unit, MGU), a body super core (body super core, BSC), an ADAS super core (ADAS super core), or a cockpit super core (cockpit super core, CSC).

In some possible implementations, the first node may be a node that replaces an original first node, and/or the second node may be a node that replaces an original second node. Alternatively, the first node may be a node that prepares to replace an original first node, and/or the second node may also be a node that prepares to replace an original second node.

In the foregoing technical solution, the first node may establish a mutual "trust relationship" with the second node based on the first message including the second node information. Further, the first node may verify validity of an identity of the second node by using the first message, and after the verification succeeds, negotiate with the second node to share the security key. Further, the shared security key may be used between the first node and the second node to generate a session key for each time of communication. When a service requires secure communication, the session key is used to encrypt communication content and establish secure communication. This helps ensure confidentiality and integrity of communication data.

With reference to the first aspect, in some implementations of the first aspect, that the first node generates a security key between the first node and the second node includes: When the second node stores first node information indicating the first node, the first node generates the security key based on the second node information, where the security key is used for session encryption between the first node and the second node.

It should be understood that the first node information indicates the second node to communicate with the first node, and/or the first node information includes public key information of the first node.

In some possible implementations, "the first node generates the security key based on the second node information" may be understood as that the first node determines, based on the second node information, that there is a communication requirement between the first node and the second node. Further, the first node generates a random number, receives a temporary public key sent by the second node, and generates the security key based on the temporary public key and the random number that is generated by the first node. The temporary public key sent by the second node is generated by the second node based on a random number generated by the second node.

It should be understood that correspondingly, the second node generates, based on the public key information of the first node, a key that is the same as the security key generated by the first node.

For example, a method for generating the security key by the first node and the second node may be a Diffie-Hellman key exchange protocol, or may be another pre-shared key computing technology. This is not specifically limited in this application.

For example, the security key may be stored in security hardware of the first node, to avoid unauthorized access or tampering.

In some possible implementations, the first node may alternatively use a standard TLS solution to verify the identity of the second node and calculate the security key. For example, TLS_ECDH_ECDSA_WITH_AES_128_CBC_SHA may be used for this purpose.

In the foregoing technical solution, the first node and the second node obtain the security key through negotiation based on the first message and public key information of each other, and communicate based on the security key. This greatly improves negotiation performance of a secure connection. In addition, a security key leakage risk can be reduced, and security key management complexity can be reduced.

With reference to the first aspect, in some implementations of the first aspect, the method further includes: The first node generates a first random number. That the first node generates a security key between the first node and the second node includes: The first node generates the security key based on the first random number and the second node information.

In some possible implementations, before generating the first random number, the first node first determines, based on the first message (or the second node information), that the first node has a communication requirement with the second node, and then generates the first random number, for example, v1, for the second node.

For example, if the second node information indicates information about a public key G^s1 of the second node, the first node generates the security key based on the random number v1 and G^s1.

In some possible implementations, the second node does not know which node the second node needs to communicate with. For example, the second node is a layer-1 device that does not store the first node information.

In some possible implementations, the first node generates a first public key, for example, G^v1, based on the first random number. It should be understood that correspondingly, the second node generates, based on the first public key G^v1 and a private key s1 of the second node, a key that is the same as the security key generated by the first node.

For example, the security key may be stored in security hardware of the first node, to avoid unauthorized access or tampering.

In the foregoing technical solution, a layer-0 device and the layer-1 device obtain the security key through negotiation based on the first message and public key information of each other, and communicate based on the security key. This greatly improves negotiation performance of a secure connection.

With reference to the first aspect, in some implementations of the first aspect, the method further includes: The first node generates a second random number; the first node generates a first public key based on the first random number; the first node sends the second random number and the first public key to the second node; the first node receives a first encrypted value, where the first encrypted value is obtained by the second node by encrypting the second random number based on a first security key, and the first security key is generated based on a key of the second node and the first public key; the first node decrypts the first encrypted value based on the security key; and the first node stores the security key when the first encrypted value is successfully decrypted.

For example, the second random number may be a Nonce value, or may be another random number. This is not specifically limited in this application.

It should be understood that when the first node successfully decrypts the first encrypted value based on the security key, identity authentication on the second node is completed. In this case, it may be considered that the second node is a legal node indicated by the first message.

It should be understood that when the first encrypted value is successfully decrypted, it is proved that the security key generated by the first node is the same as the first security key generated by the second node.

In some possible implementations, the second node may also authenticate an identity of the first node by using the foregoing method, and store the security key after the authentication succeeds.

In the foregoing technical solution, identity authentication is performed on the second node, so that communication security can be further ensured.

With reference to the first aspect, in some implementations of the first aspect, the method further includes: The first node generates a third random number; the first node generates a second public key based on the third random number; the first node sends a first signature generated based on a private key of the first node and the second public key to the second node; the first node receives a second signature, where the second signature is generated based on a private key of the second node and a third public key after the second node successfully verifies the first signature, and the third public key is generated based on a fourth random number generated by the second node; and the first node verifies the second signature based on the second node information. That the first node generates a security key between the first node and the second node includes: When the second signature is successfully verified, the first node generates the security key based on the third public key and the third random number.

In some possible implementations, the second node stores the first node information. For example, the first node information includes the public key information of the first node. In this case, correspondingly, the second node may calculate, based on the first signature and the fourth random number, a security key that is the same as the security key generated by the first node based on the third public key and the third random number.

In the foregoing technical solution, a method for generating a security key between a layer-1 device and a layer-0 device when the layer-1 device stores public key information of the layer-0 device is provided, to help ensure communication security between the layer-1 device and the layer-0 device.

With reference to the first aspect, in some implementations of the first aspect, the first node receives, from the first device, third node information indicating a third node and information indicating that the second node and the third node need to communicate; the first node generates a fifth random number; the first node generates a fourth public key based on the fifth random number and the second node information; the first node generates a fifth public key based on the fifth random number and the third node information; the first node sends the fifth public key to the second node; and the first node sends the fourth public key to the third node.

In some possible implementations, the third node information and the information indicating that the second node and the third node need to communicate may be included in the first message; or the third node information and the information indicating that the second node and the third node need to communicate may be separately sent with the first message. This is not specifically limited in embodiments of this application.

For example, both the second node and the third node may be layer-1 devices in the first terminal.

It should be understood that, because the second node and the third node cannot learn layer-1 devices with which the second node and the third node can communicate, the first node is required for assisting the second node and the third node in generating a security key required for communication between the second node and the third node.

Further, the second node may generate a security key based on the private key of the second node and the fifth public key, and the third node may generate a security key based on a private key of the third node and the fourth public key. The security keys generated by the second node and the third node are the same.

In the foregoing technical solution, the first node can assist another node in generating a security key required for communication, and a key does not need to be injected externally, so that processing of the key is closed-loop in the first terminal. This can greatly reduce a key leakage risk and reduce key management complexity.

With reference to the first aspect, in some implementations of the first aspect, before the first node receives the first message, the method further includes: The first node sends a signed public key of the first node to a second device, where the signed public key of the first node is used to generate the first message.

For example, the second device may be an OEM TSP, or may be another OEM node or device that can generate a trust credential.

In some possible implementations, the second device may be an electrical inspection device.

In some possible implementations, if the signed public key of the first node is signed by an OEM PKI server and forwarded by the OEM TSP, the OEM TSP stores the signed public key of the first node. In this case, the first node does not need to send the signed public key of the first node to the OEM TSP (through the electrical inspection device).

In some possible implementations, if a first signature certificate is issued by a device vendor, the OEM TSP does not store the signed public key of the first node. In this case, the first node needs to send the signed public key of the first node to the OEM TSP (through the electrical inspection device), so that the OEM TSP generates the first message based on the signed public key of the first node.

In some possible implementations, the signed public key of the first node is obtained by using the first signature certificate.

In some possible implementations, the signed public key of the first node may alternatively be issued by a third-party server.

With reference to the first aspect, in some implementations of the first aspect, the second node information includes public key information of the second node.

With reference to the first aspect, in some implementations of the first aspect, the public key information of the second node includes at least one of the following: a public key signature certificate of the second node, a public key signature certificate identity ID of the second node, and a hash value of a public key of the second node and identity information of the second node.

In the foregoing technical solution, when the public key information is the public key signature certificate identity ID, overheads required for storing the public key information can be reduced.

With reference to the first aspect, in some implementations of the first aspect, the method further includes: The first node receives service information of the second node from the first device, where the service information of the second node indicates a service that is in the second node and that can be accessed by the first node.

For example, if the second node supports a service A, a service B, a service C, and a service D, but the second node allows only the first node to access the service A and the service B, the service information of the second node may include information about the service A and the service B, to indicate the first node to access the service A and the service B of the second node. It should be understood that, in the foregoing case, the first node cannot access the service C and the service D of the second node.

In an example, the service A to the service D may be respectively an air conditioner service, a vehicle door control service, a brake control service, and a steering control service.

In some possible implementations, the service information of the second node may be included in the first message.

In some possible implementations, when the first message is a signed trust credential, the service information of the second node and the signed trust credential may be separately sent.

In the foregoing technical solution, access control of a finer granularity can be constructed based on communication between the first node and the second node, so that the first node can access only a part of services of the second node. When the first node is attacked, it can be ensured that content of remaining services of the second node is not leaked, to further improve communication security. The service information of the second node and the signed trust credential are separately managed, to facilitate information update during node replacing. For example, when a new second node is used to replace the original second node, only the signed trust credential including the second node information may be updated, and the service information of the second node does not need to be updated.

With reference to the first aspect, in some implementations of the first aspect, the security key includes at least one of the following: a pre-shared key, a diagnostic key, a security onboard communication SecOC key, and another application key.

In the foregoing technical solution, the pre-shared key, the diagnostic key, the security onboard communication SecOC key, the another application key, and the like are all generated based on the second node information, and "filling" of an external key is not required, so that processing of the security key is closed-loop inside the first terminal, to facilitate key management and reduce a key leakage risk.

With reference to the first aspect, in some implementations of the first aspect, the method further includes: The first node generates a trust token; the first node sends the trust token to a fourth node; the first node generates a sixth random number; the first node generates a second security key based on the trust token and the sixth random number; and the first node sends the second security key encrypted by using the trust token to the fourth node, so that the fourth node performs decryption based on the trust token prestored in the fourth node to obtain the second security key, where the second security key is used for session encryption between the first node and the fourth node.

In some possible implementations, the sixth random number may be a Nonce value, or may be another random number.

For example, the fourth node may be a layer-2 device, or may be another device without security hardware.

In the foregoing technical solution, the first node may generate, for the fourth node, a security key required for communication between the first node and the fourth node, and "filling" of an external key is not required, to prevent an external connection from threatening security of the first terminal.

With reference to the first aspect, in some implementations of the first aspect, before the first node sends the trust token to the fourth node, the method further includes: The first node performs authentication on the fourth node based on at least one of a serial number SN, a physical fingerprint, an authentication chip, or a security chip of the fourth node. That the first node sends the trust token to a fourth node includes: The first node sends the trust token to the fourth node when the authentication succeeds.

In the foregoing technical solution, identity authentication is performed on the fourth node, so that communication security can be further ensured.

With reference to the first aspect, in some implementations of the first aspect, the method further includes: The first node performs identity authentication on the fourth node based on the second security key; and the first node deletes the trust token when the identity authentication succeeds.

In the foregoing technical solution, the trust token is deleted, to prevent an external intruder from stealing the trust token and causing a security threat.

According to a second aspect, a communication method is provided. The method may include: A second device receives a first message sent by a first device, where the first message includes second node information, and the second node information indicates a second node; and the second device sends the first message to a first node.

For example, the second device may be an OEM TSP, or may be another OEM node or device that can generate a trust credential; or the second device may be an electrical inspection device.

In some possible implementations, when the second device is an OEM device like an OEM TSP, the second device may directly receive the first message sent by the first device. Further, the second device sends the first message to the electrical inspection device, and the electrical inspection device sends the first message to the first node.

In some possible implementations, when the second device is an electrical inspection device, the second device may receive, through an OEM device like an OEM TSP, the first message sent by the first device. Further, the second device directly sends the first message to the first node.

In some possible implementations, the second device directly receives the first message sent by the first device, and directly sends the first message to the first node.

It should be noted that "directly receiving" or "directly sending" may be understood as receiving or sending without being forwarded by another device.

In the foregoing technical solution, an OEM or an electrical inspection device sends the first message including the second node information to the first node, so that a "trust relationship" is established between the first node and the second node. This helps the first node and the second node generate a session key based on the first message. Further, when a service requires secure communication, using a session key for communication helps ensure confidentiality and integrity of communication data.

With reference to the second aspect, in some implementations of the second aspect, before the second device receives the first message sent by the first device, the method further includes: The second device generates a second message based on a signed public key of the second node and a communication list, where the communication list indicates that the first node and the second node need to communicate; and the second device sends the second message to the first device.

For example, the method may be performed by the OEM TSP, or may be performed by another OEM node or device that can generate a trust credential.

For example, the communication list may be in a form of a list, or may be in a form of a matrix. The communication list indicates a communication relationship between nodes in the first terminal. The communication list may alternatively be in another form. This is not specifically limited in this application.

For example, the second message may be an unsigned trust credential. In some possible implementations, the trust credential may be a trustlist of another node communicating with the first node, and the trust credential includes public key information of the another node communicating with the first node.

In the foregoing technical solution, the OEM device may generate the second message, so that the first device signs the second message to generate the first message. This helps establish a "trust relationship" between nodes in the first terminal based on the first message.

With reference to the second aspect, in some implementations of the second aspect, the second device is an electrical inspection device, and the method further includes: The second device receives a signed public key of the first node sent by a third device; and the second device, sends the signed public key of the first node to the first node.

In some possible implementations, the first device and the third device may be a same device. For example, both are OEM PKI servers. Alternatively, the first device and the third device may be different devices. For example, the first device is an OEM PKI server, and the third device is a vendor server.

It should be noted that, when the third device is different from the first device, before receiving the first message sent by the first device, the electrical inspection device further needs to obtain the signed public key of the first node from the first node.

In the foregoing technical solution, the electrical inspection device sends the signed public key of the first node to the first node, to facilitate subsequent generation and use of the first message that is based on the signed public key of the first node.

According to a third aspect, a communication method is provided. The method may include: A first device receives a second message sent by a second device; the first device signs the second message to generate a first message; and the first device sends the first message to a first node.

In the foregoing technical solution, the first device generates a signed trust table by signing a trust table, so that the signed trust table cannot be easily changed by another device. This helps further improve communication security.

According to a fourth aspect, a communication method is provided. The method may be performed by a control unit or a control module in a vehicle (or another terminal), or may be performed by a chip or a circuit used in a control unit or a control module of a vehicle (or another terminal). This is not limited in this application.

The method may include: A second node receives a first public key, where the first public key is generated by a first node based on a first message, the first message includes second node information, and the second node information indicates the second node; and the second node generates a security key based on the first public key, where the security key is used for session encryption between the first node and the second node, or the security key is used for session encryption between the second node and a third node.

For example, the second node may be a layer-1 device.

For example, the third node may be a layer-1 device that has a communication requirement with the second node.

For example, when the first node is used to generate a session key between the second node and the third node, "the first public key is generated by a first node based on a first message" may be specifically as follows: The first public key is generated by the first node based on a first random number and a public key of the third node on a premise that the first node determines, based on the first message, that the second node and the third node need to communicate. "The second node generates a security key based on the first public key" may be as follows: The second node generates the security key based on the first public key and a private key of the second node. It should be understood that, in the foregoing case, the security key is used for session encryption between the second node and the third node.

For example, when a session key between the first node and the second node is generated, and the second node does not store first node information, "the second node generates a security key based on the first public key" may be as follows: The second node generates the security key based on the first public key and the private key of the second node. Alternatively, when the second node stores first node information, "the second node generates a second security key based on the first public key" may be as follows: The second node generates the security key based on the first public key and a random number generated by the second node based on a second signed trust credential. It should be understood that, in the foregoing case, the second security key is used for session encryption between the first node and the second node.

In the foregoing technical solution, the second node may generate the security key based on the first public key sent by the first node. The security key may be used to generate a session key required for communication with the first node or the third node, and "filling" of an external key is not required. This helps improve security of an internal key of the first terminal.

With reference to the fourth aspect, in some implementations of the fourth aspect, the first public key is a public key signed by using a private key of the first node, and the method further includes: The second node determines a public key of the first node based on the first message; the second node verifies the first public key based on the public key of the first node; and the second node generates a fifth random number. That the second node generates a security key based on the first public key includes: When verification succeeds, the second node generates the security key based on the first public key and the fifth random number.

For example, the first public key may be the first signature in the first aspect.

In the foregoing technical solution, the second node and the first node may obtain the security key through negotiation based on the first message and public key information of each other, and communicate by using the security key. This greatly improves negotiation performance of a secure connection. In addition, a security key leakage risk can be reduced, and security key management complexity can be reduced.

According to a fifth aspect, a first node is provided. The first node includes: a transceiver unit, configured to receive a first message from a first device, where the first message includes second node information, and the second node information indicates a second node; and a processing unit, configured to: determine the second node based on the second node information, generate a security key between the first node and the second node, and communicate with the second node based on the security key.

With reference to the fifth aspect, in some implementations of the fifth aspect, the processing unit is specifically configured to: when the second node stores first node information indicating the first node, generate, by the first node, the security key based on the second node information, where the security key is used for session encryption between the first node and the second node.

With reference to the fifth aspect, in some implementations of the fifth aspect, the processing unit is further configured to: generate a first random number; and generate the security key based on the first random number and the second node information.

With reference to the fifth aspect, in some implementations of the fifth aspect, the processing unit is further configured to: generate a second random number; and generate a first public key based on the first random number. The transceiver unit is further configured to: send the second random number and the first public key to the second node; and receive a first encrypted value, where the first encrypted value is obtained by the second node by encrypting the second random number based on a first security key, and the first security key is generated based on a key of the second node and the first public key. The processing unit is further configured to: decrypt the first encrypted value based on the security key, and store the security key when the first encrypted value is successfully decrypted.

With reference to the fifth aspect, in some implementations of the fifth aspect, the processing unit is further configured to: generate a third random number; and generate a second public key based on the third random number. The transceiver unit is further configured to send a first signature generated based on a private key of the first node and the second public key to the second node; receive a second signature, where the second signature is generated based on a private key of the second node and a third public key after the second node successfully verifies the first signature, and the third public key is generated based on a fourth random number generated by the second node. The processing unit is further configured to: verify the second signature based on the second node information; and when the second signature is successfully verified, generate, by the first node, the security key based on the third public key and the third random number.

With reference to the fifth aspect, in some implementations of the fifth aspect, the transceiver unit is further configured to receive, from the first device, third node information indicating a third node and information indicating that the second node and the third node need to communicate. The processing unit is further configured to: generate a fifth random number; generate a fourth public key based on the fifth random number and the second node information; and generate a fifth public key based on the fifth random number and the third node information. The transceiver unit is further configured to: send the fifth public key to the second node; and send the fourth public key to the third node.

With reference to the fifth aspect, in some implementations of the fifth aspect, the transceiver unit is further configured to: before receiving the first message, send a signed public key of the first node to the second device, where the signed public key of the first node is used to generate the first message.

With reference to the fifth aspect, in some implementations of the fifth aspect, the second node information includes public key information of the second node.

With reference to the fifth aspect, in some implementations of the fifth aspect, the public key information of the second node includes at least one of the following: a public key signature certificate of the second node, a public key signature certificate identity ID of the second node, and a hash value of a public key of the second node and identity information of the second node.

With reference to the fifth aspect, in some implementations of the fifth aspect, the transceiver unit is further configured to receive service information of the second node from the first device, where the service information of the second node indicates a service that is in the second node and that can be accessed by the first node.

With reference to the fifth aspect, in some implementations of the fifth aspect, the security key includes at least one of the following: a pre-shared key, a diagnostic key, a security onboard communication SecOC key, and another application key.

With reference to the fifth aspect, in some implementations of the fifth aspect, the processing unit is further configured to generate a trust token. The transceiver unit is further configured to send the trust token to a fourth node. The processing unit is further configured to: generate a sixth random number; and generate a second security key based on the trust token and the sixth random number. The transceiver unit is further configured to send the second security key encrypted by using the trust token to the fourth node, so that the fourth node performs decryption based on the trust token prestored by the fourth node to obtain the second security key, where the second security key is used for session encryption between the first node and the fourth node.

With reference to the fifth aspect, in some implementations of the fifth aspect, the processing unit is further configured to: before the transceiver unit sends the trust token to the fourth node, perform authentication on the fourth node based on at least one of a serial number SN, a physical fingerprint, an authentication chip, or a security chip of the fourth node. The transceiver unit is specifically configured to send the trust token to the fourth node when the authentication succeeds.

With reference to the fifth aspect, in some implementations of the fifth aspect, the processing unit is further configured to: perform identity authentication on the fourth node based on the second security key; and delete the trust token when the identity authentication succeeds.

According to a sixth aspect, a second device is provided. The second device includes: a transceiver unit, configured to: receive a first message sent by a first device, where the first message includes second node information, and the second node information indicates a second node; and send the first message to a first node.

With reference to the sixth aspect, in some implementations of the sixth aspect, the second device further includes a processing unit, configured to: before the transceiver unit receives the first message sent by the first device, generate a second message based on a signed public key of the second node and a communication list, where the communication list indicates that the first node and the second node need to communicate; and the transceiver unit is further configured to send the second message to the first device.

With reference to the sixth aspect, in some implementations of the sixth aspect, when the second device is an electrical inspection device, the transceiver unit is further configured to: receive a signed public key of the first node sent by a third device; and send the signed public key of the first node to the first node.

According to a seventh aspect, a first device is provided. The first device includes: a transceiver unit, configured to receive a second message sent by a second device; and a processing unit, configured to sign the second message to generate a first message. The transceiver unit is further configured to send the first message to a first node.

According to an eighth aspect, a second node is provided. The second node includes: a transceiver unit, configured to receive a first public key, where the first public key is generated by a first node based on a first message, the first message includes second node information, and the second node information indicates the second node; and a processing unit, configured to generate a security key based on the first public key, where the security key is used for session encryption between the first node and the second node, or the security key is used for session encryption between the second node and a third node.

With reference to the eighth aspect, in some implementations of the eighth aspect, the first public key is a public key signed by using a private key of the first node, and the processing unit is further configured to: determine a public key of the first node based on the first message; verify the first public key based on the public key of the first node; generate a fifth random number; and generate the security key based on the first public key and the fifth random number when the verification succeeds.

According to a ninth aspect, a communication apparatus is provided. The apparatus includes: a memory, configured to store a program; and a processor, configured to execute the program stored in the memory. When the program stored in the memory is executed, the processor is configured to perform the method in any one possible implementation of the first aspect or the fourth aspect.

According to a tenth aspect, a communication apparatus is provided. The apparatus includes: a memory, configured to store a program; and a processor, configured to execute the program stored in the memory. When the program stored in the memory is executed, the processor is configured to perform the method in any one possible implementation of the second aspect or the third aspect.

According to an eleventh aspect, a communication system is provided. The system includes the first node in any possible implementation of the fifth aspect and the second node in any possible implementation of the eighth aspect.

With reference to the eleventh aspect, in some implementations of the eleventh aspect, the first node generates a first random number, and generates a security key based on the first random number and second node information, where the second node information indicates the second node. The first node generates a first public key based on the first random number. The first node sends the first public key to the second node. The second node receives the first public key, generates a first security key based on a private key of the second node and the first public key, and encrypts a second random number based on the first security key to obtain a first encrypted value. The second node sends the first encrypted value to the first node. The first node receives the first encrypted value, and decrypts the first encrypted value based on the security key. The first node stores the security key when the first node successfully decrypts the first encrypted value.

It should be understood that when the first node successfully decrypts the first encrypted value, it is proved that the first security key is the same as the security key.

In some possible implementations, after generating the first security key, the second node stores the first security key. Alternatively, the first node may encrypt the first random number by using the security key to generate a second encrypted value, and send the second encrypted value to the second node. Further, after successfully decrypting the second encrypted value based on the first security key, the second node stores the first security key.

With reference to the eleventh aspect, in some implementations of the eleventh aspect, the first node generates a third random number, and generates a second public key based on the third random number. The first node sends a first signature generated based on a private key of the first node and the second public key to the second node. The second node receives the first signature, generates a fourth random number, and generates a third public key based on the fourth random number. When the first signature is successfully verified, the second node generates a second signature based on a private key of the second node and the third public key, and sends the second signature to the first node. The second node generates a third security key based on the fourth random number and the second public key. The first node receives the second signature, verifies the second signature based on the second node information, and when the second signature is successfully verified, generates a fourth security key based on the third public key and the third random number.

It should be understood that the third security key is the same as the fourth security key.

It should be understood that the third security key and the security key "generated by the first node based on the third public key and the third random number" in the first aspect are a same security key.

With reference to the eleventh aspect, in some implementations of the eleventh aspect, the system further includes the first device in the eighth aspect, and the second node includes a first apparatus and a second apparatus. The first node receives, from the first device, first apparatus information indicating the first apparatus, second apparatus information indicating the second apparatus, and information indicating that the first apparatus and the second apparatus need to communicate. The first node generates a fifth random number. The first node generates a fourth public key based on the fifth random number and the first apparatus information. The first node generates a fifth public key based on the fifth random number and the second apparatus information. The first node sends the fifth public key to the first apparatus. The first node sends the fourth public key to the second apparatus. The first apparatus receives the fifth public key, and generates a fifth security key based on a private key of the first apparatus and the fifth public key. The second apparatus receives the fourth public key, and generates a sixth security key based on a private key of the second apparatus and the fourth public key.

It should be understood that the fifth security key is the same as the sixth security key.

According to a twelfth aspect, a vehicle is provided. The vehicle includes the first node in any possible implementation of the fifth aspect and/or the second node in any possible implementation of the eighth aspect.

It should be understood that the vehicle (sometimes referred to as a vehicle for short) in this application is a vehicle in a broad sense, and may be a transportation means (for example, a car, a truck, a motorcycle, a train, an airplane, or a ship), an industrial vehicle (for example, a fork lift truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not limited in this application.

According to a thirteenth aspect, a terminal device is provided. The terminal device includes the second device in any possible implementation of the sixth aspect and/or the first device in any possible implementation of the seventh aspect.

According to a fourteenth aspect, a computer program product is provided. The computer program product includes computer program code. When the computer program code is run on a computer, the computer is enabled to perform the method according to any possible implementation of the first aspect to the fourth aspect.

It should be noted that all or some of computer program code may be stored in a first storage medium. The first storage medium may be encapsulated together with a processor, or may be encapsulated separately from a processor. This is not specifically limited in embodiments of this application.

According to a fifteenth aspect, a computer-readable medium is provided. The computer-readable medium stores program code, and when the computer program code is run on a computer, the computer is enabled to perform the method in any possible implementation of the first aspect to the fourth aspect.

According to a sixteenth aspect, a chip is provided. The chip includes a processor, configured to invoke a computer program or computer instructions stored in a memory, so that the processor performs the method in any possible implementation of the first aspect to the fifth aspect.

With reference to the sixteenth aspect, in a possible implementation, the processor is coupled to the memory through an interface.

With reference to the sixteenth aspect, in a possible implementation, the chip system further includes the memory, and the memory stores the computer program or the computer instructions.

According to a seventeenth aspect, a communication method is provided. The method may include: A fourth device generates a first message, where the first message includes second node information, and the second node information indicates a second node; and the fourth device sends the first message to a first node.

For example, the fourth device may be a layer-0 primary device in a vehicle, the first node may be a layer-0 non-primary device, and the second node may be a layer-0 non-primary device, or may be a layer-1 device.

For example, the first message may be a signed trust credential, for example, a signed trust table.

In the foregoing technical solution, the signed trust credential is generated by the layer-0 primary device instead of a PKI server or the like. Because the signed trust credential does not need to be transmitted between the PKI server and the vehicle, signaling overheads in a process of establishing a "trust relationship" can be reduced. In addition, after an electrical inspection device activates generation of the signed trust credential, in a process of generating the signed trust credential and establishing a "trust relationship" based on the signed trust credential, no external device (for example, the electrical inspection device, an OEM, or the PKI server) needs to participate in the process, so that a probability of an attack performed by an attacker on the vehicle can be reduced, and security of the vehicle can be further improved. In addition, a process of generating the signed trust credential and distributing the signed trust credential to the layer-0 non-primary device does not require participation of the electrical inspection device. This helps improve a manufacturing speed of the entire vehicle.

With reference to the seventeenth aspect, in some implementations of the seventeenth aspect, the method further includes: The fourth device sends a public key of the fourth device to a fifth device, where the public key of the fourth device is used to generate an encrypted proxy signed private key; and the fourth device receives the encrypted proxy signed private key.

For example, the fifth device may include a PKI server having a signature capability.

In some possible implementations, the fifth device and the first device in the seventh aspect are a same device.

With reference to the seventeenth aspect, in some implementations of the seventeenth aspect, the method further includes: The fourth device generates a second message based on a signed public key of the second node and a communication list, where the communication list indicates that the first node and the second node need to communicate. That the fourth device generates a first message includes: The fourth device signs the second message to generate the first message.

For example, the communication list may include a communication matrix. The communication list may be generated by the fourth device; or the communication list may be generated by the OEM and then loaded into the fourth device.

For example, the second message may be an unsigned trust credential, for example, an unsigned trust table.

With reference to the seventeenth aspect, in some implementations of the seventeenth aspect, the method further includes: The fourth device decrypts the encrypted proxy signed private key by using the public key of the fourth device, to obtain a proxy signed private key. That the fourth device signs the second message to generate the first message includes: The fourth device signs the second message by using the proxy signed private key, to generate the first message.

With reference to the seventeenth aspect, in some implementations of the seventeenth aspect, the method further includes: The fourth device receives a first signal from an electrical inspection device; and the fourth device sends request information to the second node based on the first signal, where the request information is used to request the signed public key of the second node.

For example, the first signal is used to activate the fourth device.

According to an eighteenth aspect, a communication method is provided. The method may include: A fifth device receives a public key of a fourth device sent by the fourth device; the fifth device generates an encrypted proxy signed private key based on the public key of the fourth device, where the encrypted proxy signed private key is used to generate a first message, the first message includes second node information, and the second node information is used to generate a security key between a first node and a second node; and the fifth device sends the encrypted proxy signed private key to the fourth device.

According to a nineteenth aspect, a fourth device is provided. The fourth device includes: a processing unit, configured to generate a first message, where the first message includes second node information, and the second node information indicates a second node; and a transceiver unit, configured to send the first message to a first node.

With reference to the nineteenth aspect, in some implementations of the nineteenth aspect, the transceiver unit is further configured to: send a public key of the fourth device to a fifth device, where the public key of the fourth device is used to generate an encrypted proxy signed private key; and receive the encrypted proxy signed private key.

With reference to the nineteenth aspect, in some implementations of the nineteenth aspect, the processing unit is further configured to: generate a second message based on a signed public key of the second node and a communication list, where the communication list indicates that the first node and the second node need to communicate; and sign the second message to generate the first message.

With reference to the nineteenth aspect, in some implementations of the nineteenth aspect, the processing unit is configured to decrypt the encrypted proxy signed private key by using the public key of the fourth device, to obtain a proxy signed private key; and the processing unit is configured to sign, by the fourth device, the second message by using the proxy signed private key, to generate the first message.

With reference to the nineteenth aspect, in some implementations of the nineteenth aspect, the transceiver unit is further configured to: receive a first signal from an electrical inspection device; and send request information to the second node based on the first signal, where the request information is used to request the signed public key of the second node.

According to a twentieth aspect, a fifth device is provided. The fifth device includes: a transceiver unit, configured to receive a public key of a fourth device sent by the fourth device; and a processing unit, configured to generate an encrypted proxy signed private key based on the public key of the fourth device, where the encrypted proxy signed private key is used to generate a first message, the first message includes second node information, and the second node information is used to generate a security key between a first node and ta second node. The transceiver unit is further configured to send the encrypted proxy signed private key to the fourth device.

### BRIEF DESCRIPTION OF DRAWINGS

FIG. 1 is a functional block diagram of a vehicle according to an embodiment of this application;
FIG. 2 is a diagram of an architecture of a communication system according to an embodiment of this application;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7(a) and FIG. 7(b) are a schematic flowchart of a communication method according to an embodiment of this application;
FIG. 8(a) and FIG. 8(b) are a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a diagram of an application scenario of a communication method according to an embodiment of this application;
FIG. 13 is a schematic flowchart of a communication method according to an embodiment of this application;
FIG. 14 is a schematic flowchart of a communication method according to an embodiment of this application;
FIG. 15 is a schematic flowchart of a communication method according to an embodiment of this application;
FIG. 16 is a schematic flowchart of a communication method according to an embodiment of this application;
FIG. 17 is a schematic flowchart of a communication method according to an embodiment of this application;
FIG. 18 is a block diagram of a communication apparatus according to an embodiment of this application;
FIG. 19 is another block diagram of a communication apparatus according to an embodiment of this application;
FIG. 20 is a schematic flowchart of a communication method according to an embodiment of this application;
FIG. 21 is a schematic flowchart of a communication method according to an embodiment of this application;
FIG. 22 is a schematic flowchart of a communication method according to an embodiment of this application;
FIG. 23 is a schematic flowchart of a communication method according to an embodiment of this application;
FIG. 24 is a schematic flowchart of a communication method according to an embodiment of this application;
FIG. 25 is a schematic flowchart of a communication method according to an embodiment of this application; and
FIG. 26 is a schematic flowchart of a communication method according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

Prefix words such as "first" and "second" used in embodiments of this application are merely used to distinguish between different described objects, and do not limit locations, sequences, priorities, quantities, or content of described objects. Use of the prefix words, such as ordinal numbers, used to distinguish described objects in embodiments of this application does not constitute a limitation on the described objects. For descriptions of the described objects, refer to the context descriptions in the claims or embodiments. Use of such a prefix word should not constitute a redundant limitation. In addition, in the descriptions of embodiments, unless otherwise specified, "a plurality of" means two or more than two.

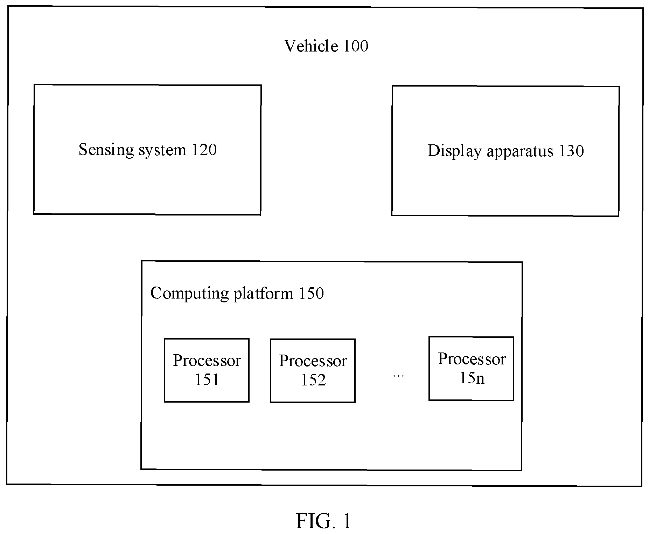

FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense information about an environment around the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include a processor 151 to a processor 15n (where n is a positive integer). The processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processor 151 to the processor 15n may invoke the instructions in the memory and execute the instructions to implement a corresponding function.

The vehicle 100 may include an ADAS. The ADAS obtains information from around the vehicle by using a plurality of types of sensors (including but not limited to the lidar, the millimeter-wave radar, the camera apparatus, the ultrasonic sensor, the global positioning system, and the inertia measurement unit) in the sensing system 120, and analyzes and processes the obtained information, to implement functions such as obstacle sensing, target recognition, vehicle positioning, path planning, and driver monitoring/reminder, so as to improve driving security, automation, and comfort of the vehicle.

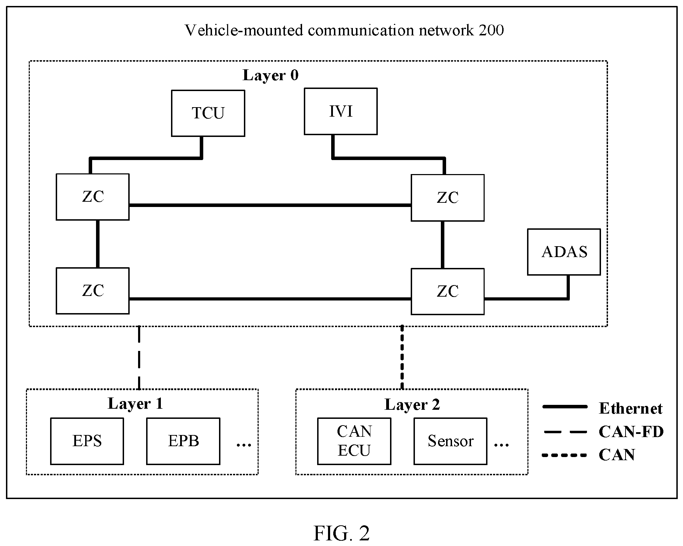

FIG. 2 is a diagram of an architecture of a communication system according to an embodiment of this application. As shown in FIG. 2, a vehicle-mounted communication network 200 includes layer-0 devices, layer-1 devices, and layer-2 devices. The layer-0 devices include a ZC, a TCU, an IVI, and an ADAS, which are connected to each other through an Ethernet cable. The layer-0 devices usually have security hardware, such as a hardware security module (hardware security module, HSM) or a trusted platform module (trusted platform module, TPM), so that the layer-0 devices can generate a security key and perform a public key encryption operation. For example, the generated "security key" includes but is not limited to a pre-shared key (pre-shared key, PSK), a diagnostic key, a security onboard communication (security onboard communication, SecOC) key, and another application key.

The layer-1 devices are usually connected to each other through a CAN-FD cable and connected to the layer-0 devices through a CAN-FD. The layer-1 devices include an EPS and an EPB, and may further include a CDC or the like. Security hardware such as an HSM and a TPM may be at a layer 1.

It should be understood that the CAN-FD protocol allows 64-byte data to be transmitted in a controller area network (controller area network, CAN) frame data part, and the part of data is far less than a payload of an Ethernet frame.

The layer-2 devices are ECU devices with limited resources, do not have security hardware, and are connected to each other through a low-bandwidth CAN bus. For example, an example of the layer-2 device may include a CAN ECU, a sensor, an executor, and the like.

It should be understood that ECUs (for example, the layer-1 devices and the layer-2 devices) connected through non-Ethernet do not have a TLS cipher suite that can be used to implement a transport layer security (transport layer security, TLS)-based security standard.

It should be noted that devices that have security hardware but are connected through a CAN bus may still perform lightweight public key operations, and may be considered as layer-1 devices in this embodiment of this application. Devices that do not have security hardware but are connected through a CAN-FD cannot perform public key operations, and therefore, are still considered as layer-2 devices with limited resources in this embodiment of this application. For example, the "public key operation" may include an operation of autonomously generating a public-private key pair.

It should be understood that various devices shown in FIG. 2 are merely examples. During actual application, the devices may be added or deleted based on an actual requirement. For example, there may be different quantities of devices with different names, or the devices may be connected to each other in different topologies in different vehicles.

As described above, in this application, vehicle-mounted devices are classified into three types based on connection types and processing capabilities of the vehicle-mounted devices: layer-0 devices, layer-1 devices, and layer-2 devices. In this embodiment of this application, a corresponding solution is provided for each layer, to establish secure communication between the vehicle-mounted devices.

Secure communication between the layer-0 devices: Each layer-0 device establishes, through a trust table that includes information about another layer-0 device that communicates with the layer-0 device, a trust relationship with the another layer-0 device. Further, based on a signature certificate-based public key encryption technology, a device identity verification mechanism and trusted communication are established between the layer-0 devices, so that a "trust ring" is formed among all the layer-0 devices. Any device from the trust ring may further help another device on the trust ring perform identity verification and secure communication.

Secure communication between the layer-1 devices: A "trust relationship" between a layer-0 device and a layer-1 device and a trust relationship between the layer-1 devices are established based on trust tables of the layer-0 devices, and secure communication is established between the devices based on the trust relationships.

Secure communication between the layer-2 devices: The layer-0 device verifies a trust relationship with a layer-2 device and uses a symmetric key encryption operation to construct secure communication with the layer-2 device.

It should be noted that an ECU having security hardware can perform a public key encryption operation (for example, elliptic curve cryptography (elliptic curve cryptography, ECC)), secure key generation and storage, and the like.

In some possible implementations, the layer-0 devices include a layer-0 primary device and a layer-0 non-primary device. The layer-0 primary device has a signature capability, and may generate a trust table for the layer-0 non-primary device, and sign the trust table to generate a signed trust table. In addition, the layer-0 primary device may further generate a signed trust table for the layer-1 devices.

For example, the signature capability of the layer-0 primary device may be obtained by using a proxy signature (proxy signature). The proxy signature is a special digital signature solution that allows a user (original signer) to proxy a signature capability of the user to another user (proxy user), so that the proxy user can generate a digital signature on behalf of the original signer. To implement a proxy signature function, the original signer needs to distribute a proxy signed key (proxy signing key) to the proxy user, and a public key of the original signer may be used to verify the generated signature.

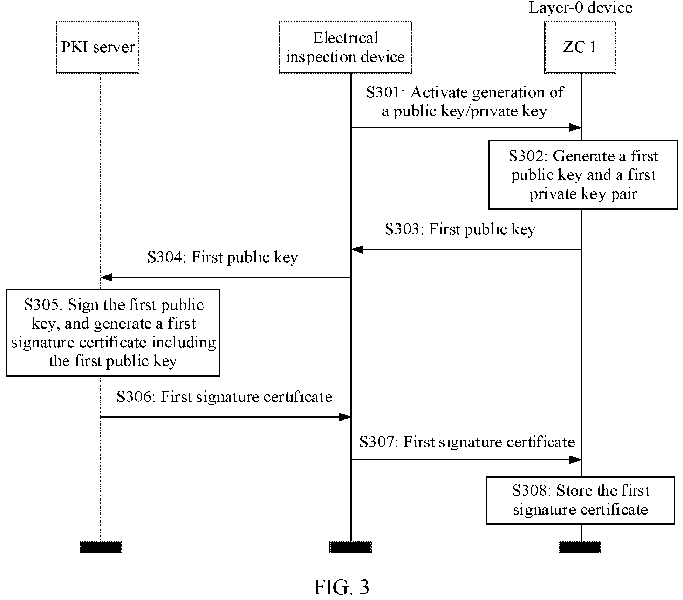

The following describes in detail methods for communication between vehicle-mounted devices with reference to FIG. 3 to FIG. 16.

FIG. 3 is a schematic flowchart of a communication method according to an embodiment of this application. More specifically, FIG. 3 shows a method for generating a key and a signature certificate in a layer-0 device. In this embodiment of this application, a zone controller ZC 1 in the layer-0 device is used as an example for description. The method may include the following steps.

S301: An electrical inspection device activates generation of a public key/private key.

For example, when the electrical inspection device is connected to the layer-0 device, the layer-0 device is activated to generate a public key/private key pair.

S302: The ZC 1 generates a first public key and a first private key.

It should be understood that the first public key and the first private key form a key pair.

For example, the ZC 1 generates the private key/public key pair of the ZC 1 in security hardware, sends the first public key (for example, PK_ZC1) to the electrical inspection device, and retains the first private key in the security hardware of the ZC 1. It should be understood that no third party can obtain or tamper with the private key securely stored in the security hardware.

S303: The ZC 1 sends the first public key to the electrical inspection device.

S304: The electrical inspection device sends the first public key to a public key infrastructure (public key infrastructure, PKI) server.

Optionally, the electrical inspection device may be connected to the PKI server through wireless communication, for example, the Internet or the Internet of things. This is not specifically limited in embodiments of this application.

S305: The PKI server signs the first public key, and generates a first signature certificate including the first public key.

For example, the PKI server signs the first public key of the ZC 1 by using a private key of the PKI server, to generate a signature certificate (for example, CERT_PK_ZC1). It should be understood that the certificate includes the public key of the ZC 1.

S306: The PKI server sends the first signature certificate to the electrical inspection device.

S307: The electrical inspection device sends the first signature certificate to the ZC 1.

S308: The ZC 1 stores the first signature certificate.

It should be noted that a supplier of the vehicle-mounted device (for example, a supplier of the ZC 1) may perform, during device production, the steps performed by the electrical inspection device or the PKI server shown in FIG. 3. In this case, the electrical inspection device may be an electrical inspection device of the supplier. Further, a PKI server of the supplier signs the first signature certificate. Optionally, the method in FIG. 3 may alternatively be performed by an original equipment manufacturer (original equipment manufacturer, OEM). In this case, the electrical inspection device is an electrical inspection device of the OEM, and a PKI server of the OEM signs the first signature certificate.

It should be understood that, for each layer-0 device, the method shown in FIG. 3 may be used to generate a private key/public key pair and obtain a signature certificate of a public key.

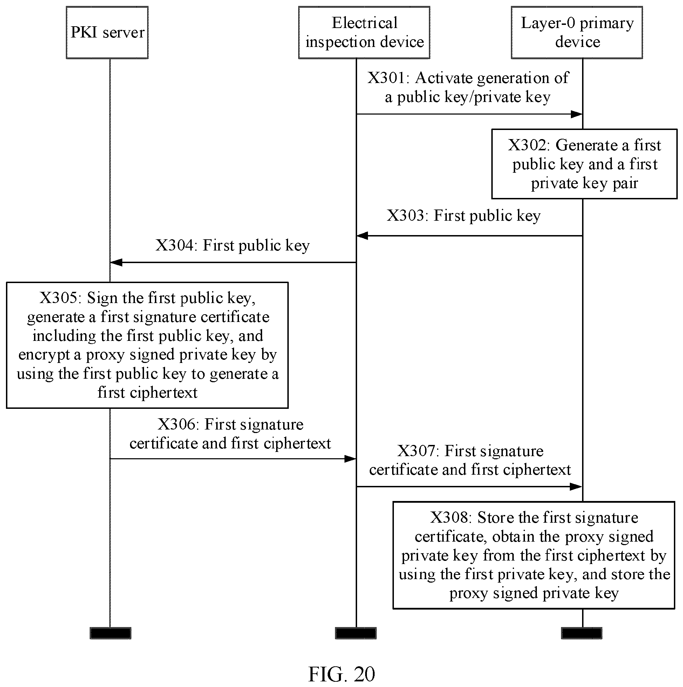

In some possible implementations, for a layer-0 non-primary device, the method shown in FIG. 3 may be used to generate a private key/public key pair and obtain a signature certificate of a public key; and for a layer-0 primary device, a method shown in FIG. 20 may be used to generate a private key/public key pair and generate a signature certificate of a public key.

In this embodiment of this application, an example in which the layer-0 primary device is a CDC is used for description. The method may include the following steps.

X301: An electrical inspection device activates generation of a public key/private key.

For example, when the electrical inspection device is connected to the layer-0 primary device, the layer-0 primary device is activated to generate a public key/private key pair.

X302: The layer-0 primary device generates a first public key and a first private key.

It should be understood that the first public key (for example, PK_CDC) and the first private key (for example, PR_CDC) form a key pair.

For example, the layer-0 primary device generates the private key/public key pair of the layer-0 primary device in security hardware, sends the first public key to the electrical inspection device, and retains the first private key in the security hardware of the layer-0 primary device. It should be understood that no third party can obtain or tamper with the private key securely stored in the security hardware.

X303: The layer-0 primary device sends the first public key to the electrical inspection device.

X304: The electrical inspection device sends the first public key to the PKI server.

X305: The PKI server signs the first public key, generates a first signature certificate including the first public key, and encrypts a proxy signed private key by using the first public key to generate a first ciphertext.

For example, the PKI server signs the first public key of the layer-0 primary device by using a private key of the PKI server, to generate a signature certificate (for example, CERT_PK_ZC1). It should be understood that the certificate includes the public key of the layer-0 primary device (for example, the CDC).

In addition, the PKI server generates the proxy signed private key (for example, PSK_CDC) of the layer-0 primary device by using a signed private key of the PKI server, the first public key (for example, PK_CDC) of the layer-0 primary device, and other related information such as ID information of a vehicle. Then, the PSK_CDC is encrypted by using the PK_CDC to generate the first ciphertext.

X306: The PKI server sends the first signature certificate and the first ciphertext to the electrical inspection device.

X307: The electrical inspection device sends the first signature certificate and the first ciphertext to the layer-0 primary device.

X308: The layer-0 primary device stores the first signature certificate, obtains the proxy signed private key from the first ciphertext by using the first private key, and stores the proxy signed private key.

It should be noted that a supplier of the vehicle-mounted device (for example, a supplier of the CDC) may perform, during device production, the steps performed by the electrical inspection device or the PKI server shown in FIG. 3. In this case, the electrical inspection device may be an electrical inspection device of the supplier. Further, a PKI server of the supplier signs the first signature certificate. Optionally, the method shown in FIG. 20 may alternatively be performed by an OEM. In this case, the electrical inspection device is an electrical inspection device of the OEM, and a PKI server of the OEM signs the first signature certificate.

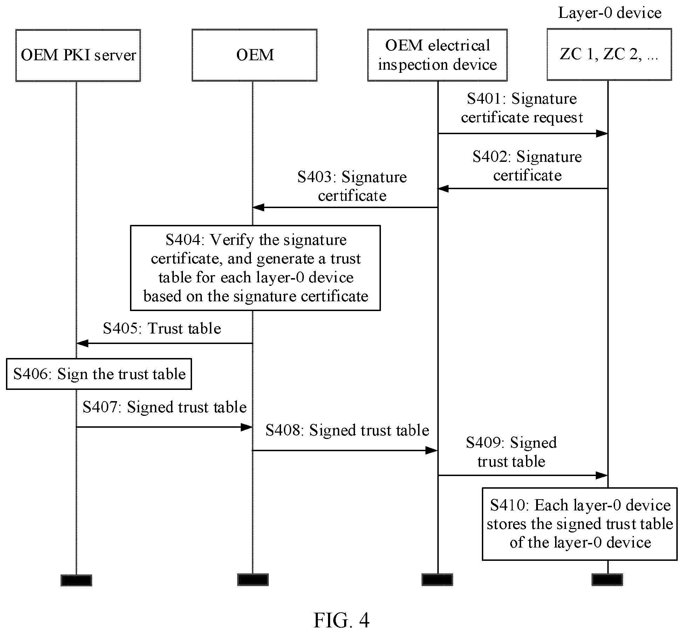

FIG. 4 is a schematic flowchart of a communication method according to an embodiment of this application. More specifically, FIG. 4 shows a method for generating a signed trust table between layer-0 devices. The method may include the following steps.

S401: An OEM electrical inspection device requests a certificate from a layer-0 device.

In some possible implementations, the OEM electrical inspection device may be separately connected to a plurality of layer-0 devices, and request a signature certificate from each layer-0 device (for example, a ZC 1, a ZC 2, and a ZC 3).

S402: The layer-0 device sends a signature certificate to the OEM electrical inspection device.

For example, each layer-0 device sends the signature certificate of the layer-0 device to the OEM electrical inspection device. For example, if the layer-0 devices include the ZC 1, the ZC 2, and the ZC 3, the ZC 1, the ZC 2, and the ZC 3 send respective signature certificates to the electrical inspection device. For example, the ZC 1 sends a signature certificate CERT_PK_ ZC1 to the OEM electrical inspection device, the ZC 2 sends a signature certificate CERT_PK_ ZC2 to the OEM electrical inspection device, and the ZC 3 sends a signature certificate CERT_PK_ ZC3 to the OEM electrical inspection device.

S403: The OEM electrical inspection device sends the signature certificate to an OEM.

For example, the electrical inspection device sends all the signature certificates to the OEM. The OEM electrical inspection device may send all the signature certificates to the OEM at a time, or may send the signature certificates in batches, for example, send one or more signature certificates each time. This is not specifically limited in embodiments of this application.

S404: The OEM verifies the signature certificate, and generates a trust table for each layer-0 device based on the signature certificate.

In some possible implementations, the OEM stores a communication matrix, and the communication matrix includes information indicating which vehicle-mounted device has a communication requirement with another vehicle-mounted device. It should be noted that, that a device 1 has a communication requirement with a device 2 may mean that signaling interaction may exist between the device 1 and the device 2 in a vehicle running process. In a specific implementation process, the device 1 and the device 2 do not necessarily communicate or have signaling interaction.

Further, the OEM creates a trust table for each layer-0 device based on the communication matrix and the signature certificate. For example, the OEM learns, based on the communication matrix, that the ZC 1 has a communication requirement with each of the ZC 2 and the ZC 3. Therefore, a trust table of the ZC 1 includes public key information and VINs of the ZC 2 and the ZC 3. It should be understood that the identification number is globally unique for each vehicle.

In an example, information about the ZC 2 and the ZC 3 may be signature certificate IDs of the ZC 2 and the ZC 3, for example, a signature certificate ID CertID_ZC2 corresponding to the signature certificate (CERT_PK_ZC2) of the ZC 2 and a signature certificate ID CertID_ZC3 corresponding to the signature certificate (CERT_PK_ZC3) of the ZC 3. Similarly, a trust table of the ZC 2 has a signature certificate ID of the ZC 1 and any other layer-0 device (for example, a ZC 4) that needs communication during vehicle running. For example, trust tables of the ZC 1 and the ZC 2 are respectively shown in Table 1 and Table 2.

**Table 1 Trust table of the ZC 1**

| | |
|---|---|
| VIN | CertID_ZC2, CertID_ZC3, ... |

**Table 2 Trust table of the ZC 2**

| | |
|---|---|
| VIN | CertID_ZC1, CertID_ZC4, ... |

For another example, the information about the ZC 2 and the ZC 3 may include public key hashes of the ZC 2 and the ZC 3. In other words, the public key hashes of the ZC 2 and the ZC 3 are listed in the trust table of the ZC 1.

For still another example, the information about the ZC 2 and the ZC 3 may include signature certificates of the ZC 2 and the ZC 3. In other words, the trust table of the ZC 1 includes the signature certificates of the ZC 2 and the ZC 3.

For still another example, the information about the ZC 2 and the ZC 3 may include SNs of the ZC 2 and the ZC 3. In other words, the trust table of the ZC 1 includes the SNs of the ZC 2 and the ZC 3.

In some possible implementations, a trust table of a device may further include a serial number (serial number, SN) of another device that needs to communicate with the device. For example, the trust table of the ZC 1 may further include an SN of the ZC 2 and an SN of the ZC 3, and the trust table of the ZC 2 may further include an SN of the ZC 1 and an SN of the ZC 4.

It should be understood that the OEM prepares a trust table for each layer-0 device of the vehicle, and sends the trust table of each layer-0 device to an OEM PKI server.

S405: The OEM sends the trust table to the OEM PKI server.

For example, the OEM may send all trust tables to the OEM PKI server at a time, or may send the trust tables in batches, for example, send one or more trust tables each time. This is not specifically limited in embodiments of this application.

S406: The OEM PKI server signs the trust table.

For example, the OEM PKI server signs each trust table by using a private key of the OEM PKI server, to generate a plurality of signed trust tables. It should be understood that one signed trust table corresponds to one layer-0 device.

In some possible implementations, the OEM PKI server may send a public key of the OEM PKI server to each layer-0 device through the OEM and the OEM electrical inspection device, so that the layer-0 device verifies the signed trust table based on the public key.

S407: The OEM PKI server sends the plurality of signed trust tables to the OEM.

S408: The OEM sends the signed trust tables to the OEM electrical inspection device.

S409: The OEM electrical inspection device sends the signed trust tables to the layer-0 devices.

It should be understood that the OEM electrical inspection device sends a signed trust table to a corresponding layer-0 device, for example, sends a signed trust table of the ZC 1 to the ZC 1, and sends a signed trust table of the ZC 2 to the ZC 2.

S410: Each layer-0 device stores a signed trust table of the layer-0 device.

For example, the signed trust table of the ZC 1 is stored in the ZC 1, and this rule also applies to other signed trust tables.

It should be understood that the "OEM" in embodiments of this application may be a trust service provider (trust service provider, TSP) of the OEM, or may be another OEM device that can generate a trust table.

In the communication method provided in this embodiment of this application, the trust tables of the layer-0 devices are signed by the OEM PKI server, and an external device cannot change these signed trust tables. Therefore, with the help of signature binding, a "trust relationship" is established between the layer-0 devices by using the signed trust tables. Further, the layer-0 devices form a "trust ring" based on public key information included in the trust tables. A device on the ring may perform identity verification on another device that needs to communicate with the device on the ring based on the signed trust tables, and establish secure communication with the device. In this process, participation of any other third party is not required. In addition, the layer-0 devices help devices at another layer establish secure communication.

In some possible implementations, if a layer-0 primary device has a signature capability, the step of generating the signed trust table may be completed by the layer-0 primary device.

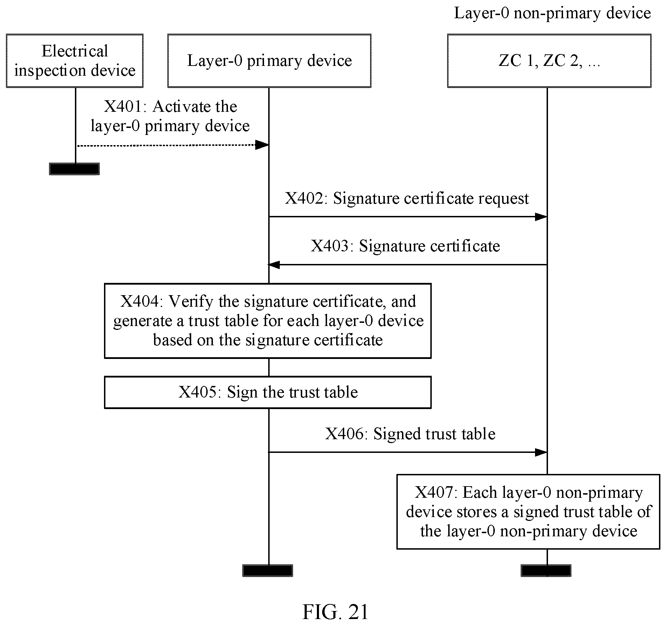

FIG. 21 is a schematic flowchart of a communication method according to an embodiment of this application. More specifically, FIG. 21 shows a method for generating a trust table for another layer-0 non-primary device by the layer-0 primary device (for example, a CDC) by using a proxy signed private key (for example, a PSK_CDC). The method may include the following steps.

X401: An OEM electrical inspection device activates the layer-0 primary device.

X402: The layer-0 primary device sends a signature certificate request to the layer-0 non-primary device.

Without loss of generality, the layer-0 primary device separately requests signature certificates from a plurality of layer-0 non-primary devices (for example, a ZC 1, a ZC 2, and a ZC 3).

X403: The layer-0 non-primary device sends a signature certificate (and/or an SN) to the layer-0 primary device.

For example, each layer-0 non-primary device sends a signature certificate of the layer-0 non-primary device to the layer-0 primary device. For example, if the layer-0 non-primary devices include the ZC 1, the ZC 2, and the ZC 3, the ZC 1, the ZC 2, and the ZC 3 send respective signature certificates to the layer-0 primary device. For example, the ZC 1 sends a signature certificate CERT_PK_ ZC1 to the layer-0 primary device, the ZC 2 sends a signature certificate CERT_PK_ ZC2 to the layer-0 primary device, and the ZC 3 sends a signature certificate CERT _PK_ ZC3 to the layer-0 primary device.

In some possible implementations, the layer-0 non-primary device also sends the SN to the layer-0 primary device.

X404: The layer-0 primary device verifies the signature certificate, and generates a trust table for each layer-0 device based on the signature certificate.

In some possible implementations, the layer-0 primary device stores a communication matrix, and the communication matrix includes information indicating which vehicle-mounted device has a communication requirement with another vehicle-mounted device.

In some possible implementations, each layer-0 device includes a layer-0 non-primary device, or may include a layer-0 primary device.

For example, the communication matrix may be generated by the layer-0 primary device, or may be generated by an OEM and then loaded into the layer-0 primary device.

Further, for a method for creating the trust table for each layer-0 device by the layer-0 primary device based on the communication matrix and the signature certificate, refer to the descriptions in S403. Details are not described herein again.

X405: The layer-0 primary device signs the trust table.

For example, the layer-0 primary device uses a proxy signed private key (for example, PSK_CDC) of the layer-0 primary device to sign each trust table, and generates a plurality of signed trust tables.

It should be understood that one signed trust table corresponds to one layer-0 device.

X406: The layer-0 primary device sends the signed trust tables to corresponding layer-0 non-primary devices.

In some possible implementations, the layer-0 primary device may send a public key of a PKI server to each layer-0 non-device, so that the layer-0 non-device verifies the signed trust table based on the public key. The public key of the PKI server and a private key of the PKI server that is used to generate the proxy signed private key of the layer-0 primary device are a key pair.

It should be understood that the layer-0 primary device sends a signed trust table to a corresponding layer-0 device, for example, sends a signed trust table of the ZC 1 to the ZC 1, and sends a signed trust table of the ZC 2 to the ZC 2.

X407: Each layer-0 non-primary device stores a signed trust table of the layer-0 non-primary device.

For example, the signed trust table of the ZC 1 is stored in the ZC 1, and this rule also applies to other signed trust tables.

In the communication method provided in this embodiment of this application, the trust tables of the layer-0 devices are signed by the layer-0 primary device, and do not need to rely on the PKI server, so that an external device can be further prevented from changing these signed trust tables.

Further, two layer-0 devices may calculate a PSK between each other based on the signed trust tables. It should be understood that, in a vehicle running phase, the two layer-0 devices calculate a session key by using the PSK. The calculated PSK is stored in security hardware of each device to avoid unauthorized access and/or tampering. It should be understood that this process is the same for all layer-0 devices that need to calculate a PSK.

For example, based on the trust table of the ZC 1, the ZC 1 needs to communicate with the ZC 2, and vice versa. Therefore, the ZC 1 and the ZC 2 each calculate a PSK. In some possible implementations, both the ZC 1 and the ZC 2 determine a signature certificate of the other party based on the trust tables. Further, the ZC 1 and the ZC 2 verify a signature certificate of each other by using the public key of the OEM PKI server (the public key and a key used to sign a public key of the layer-0 device are a key pair). For example, the ZC 1 verifies the signature certificate of the ZC 2 by using the public key of the OEM PKI server. After the verification succeeds, the two devices may obtain a public key of each other from the signature certificates. For example, the ZC 1 obtains a public key of the ZC 2 from the signature certificate of the ZC 2, and the ZC 2 obtains a public key of the ZC 1 from the signature certificate of the ZC 1.

Further, the ZC 1 and the ZC 2 may use a Diffie-Hellman (DH) key exchange protocol to calculate the PSKs. For example, in a Diffie-Hellman key exchange, the ZC 1 generates a random value as a key, and generates a first temporary public key based on the key; and the ZC 2 generates a random value as a key, and generates a second temporary public key based on the key. The ZC 1 and the ZC 2 exchange a temporary public key of each other and use the temporary public keys and respective keys to calculate a same shared key. The shared key can be used to generate a new session key subsequently.

For example, the ZC 1 generates a random value v1 as a key, and calculates a first temporary public key G^v1; the ZC 2 generates a random value v2 as a key, and calculates a second temporary public key G^v2; and the ZC 1 and the ZC 2 send respective temporary public keys to each other. Further, the ZC 1 calculates a shared key G^v2v1 based on v1 and the second temporary public key G^v2, and the ZC 2 calculates a shared key G^v2v1 based on v2 and the first temporary public key G^v1.

It should be understood that, in addition to the Diffie-Hellman key exchange protocol, another pre-shared key calculation technology may also be used to calculate a shared key (for example, a PSK).

It should be noted that, in addition to calculating the PSK, other keys, such as a diagnostic key, a SecOC key, and another application key, may also be calculated in the foregoing steps.

It should be understood that, because layer-0 devices are connected to each other through Ethernet, the devices may alternatively verify each other and calculate a PSK by using a standard TLS solution. For example, TLS_ECDH_ECDSA_WITH_AES_128_CBC_SHA may be used for this purpose.

It should be understood that the foregoing steps may be completed in a vehicle production phase. In other words, the steps may be performed in a trusted and controlled environment, where all participating entities are trusted.

The vehicle production phase usually occurs in a controlled and trusted environment, and a vehicle operation phase is an after-sales market phase, and is an environment in which a vehicle is more vulnerable to a third-party attack in an actual operation. These devices communicate with each other during vehicle running. To protect such communication, the devices may need a key to encrypt communication content and/or an identity verification key to implement message integrity. Therefore, a vehicle device establishes a session key in this phase according to a requirement of the vehicle device. The session key may be generated once, or generated once a day, or may be generated when a vehicle engine is started.

In some possible implementations, the ZC 1 and the ZC 2 perform mutual authentication by using the PSK, and the PSK is securely stored in security hardware of the ZC 1 and the ZC 2. When the two parties need to communicate, one party needs to prove to the other party that the party knows the PSK. In other words, identity verification is performed. After the identity verification succeeds, the two parties may use the Diffie-Hellman key exchange protocol or other such protocols to calculate a new session key, and use the session key to encrypt communication and/or calculate authentication information.

It should be noted that, because the layer-0 devices are connected to each other through the Ethernet, the devices may alternatively use standard TLS and PSK solutions to establish a new session key. For example, TLS_PSK_WITH_AES_128_CBC_SHA may be used for this purpose.

It is considered that a service life of the vehicle may be as long as several decades, a device in the vehicle may be damaged and need to be replaced during this period, and a new device further needs a key for secure communication. Therefore, trust tables need to be updated for the new device and another device that has a direct communication relationship with the new device.

In some possible implementations, when a device is replaced, a vehicle owner or a driver may authorize, by entering a password/PIN through a graphical user interface of the vehicle or a registered mobile phone, the OEM to perform component replacement. To explain this process, it is assumed that the ZC 1 is replaced by a ZC 1'. The ZC 1' generates a private key/public key pair and obtains a signature certificate of a public key.

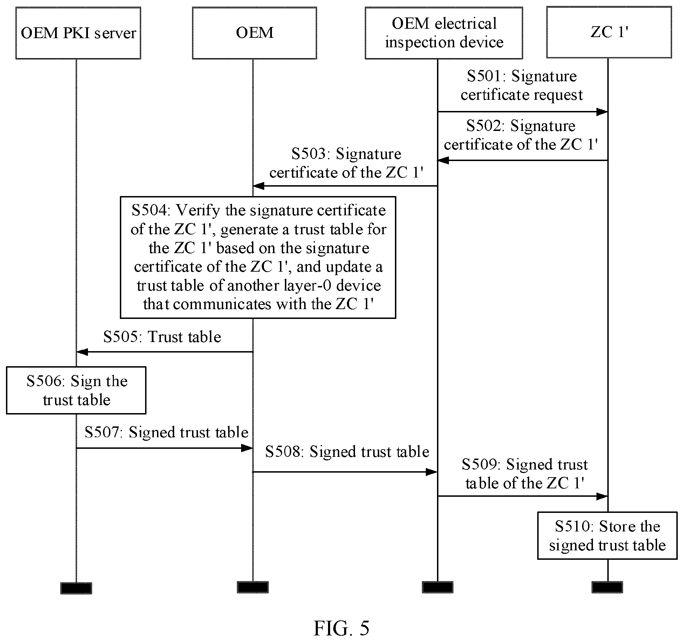

FIG. 5 is a schematic flowchart of a communication method according to an embodiment of this application. More specifically, FIG. 5 shows a method for updating trust tables of a new device and another device that has a direct communication relationship with the new device. The method may include the following steps.

S501: An OEM electrical inspection device requests a signature certificate from a ZC 1'.

For example, the OEM electrical inspection device is connected to the ZC 1' and requests the signature certificate from the ZC 1'.

S502: The ZC 1' sends the signature certificate of the ZC 1' to the OEM electrical inspection device.

S503: The OEM electrical inspection device sends the signature certificate of the ZC 1' to an OEM.

S504: The OEM verifies the signature certificate of the ZC 1', generates a trust table for the ZC 1' based on the signature certificate of the ZC 1', and updates a trust table of another layer-0 device that communicates with the ZC 1'.

In some possible implementations, because the ZC 1' is used to replace a ZC 1, the OEM only needs to import content in a trust table of the ZC 1 into the trust table of the ZC 1', and replace, with public key information of the ZC 1', public key information of the ZC 1 in a trust table that has information about the ZC 1 and that is of another layer-0 device.

S505: The OEM sends the trust table to an OEM PKI server.

It should be understood that the trust table in this step may include the trust table of the ZC 1' and a trust table of another layer-0 device that needs to communicate with the ZC 1'. The OEM may send all the trust tables to the OEM PKI server at a time, or may send the trust tables in batches.

S506: The OEM PKI server signs the trust table.

For example, the OEM PKI server signs each trust table by using a private key of the OEM PKI server, to generate a plurality of signed trust tables.

S507: The OEM PKI server sends the signed trust tables to the OEM.

It should be understood that the signed trust tables in this step include a signed trust table of the ZC 1' and a signed trust table of the another layer-0 device that needs to communicate with the ZC 1'.

S508: The OEM sends the signed trust tables to the OEM electrical inspection device.

S509: The OEM electrical inspection device sends the signed trust table of the ZC 1' to the ZC 1'.

S510: The ZC 1' stores the signed trust table of the ZC 1'.

It should be noted that the OEM electrical inspection device further separately sends signed trust tables of other layer-0 devices that need to communicate with the ZC 1' to the corresponding layer-0 devices, so that the layer-0 devices update signed trust tables.

In some possible implementations, a layer-0 device affected by device replacement may subsequently perform authentication based on a signed trust table and/or a signature certificate and calculate a pre-shared key. It should be understood that, during vehicle running, the device calculates a new session key as in a normal case.

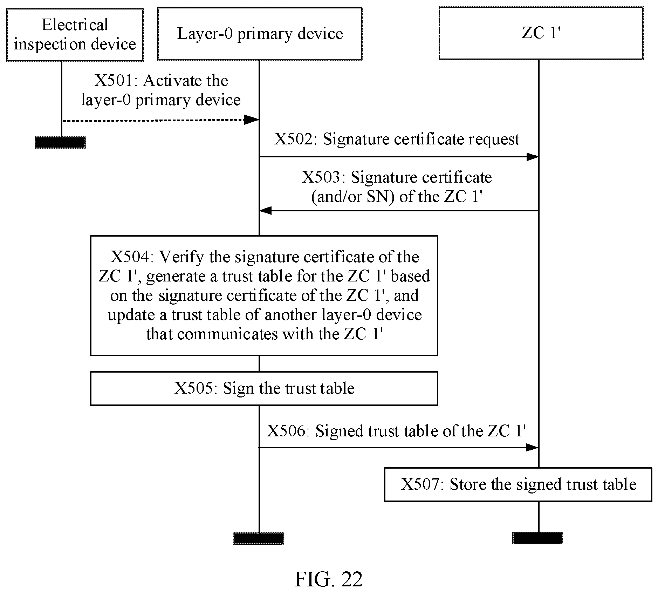

In some possible implementations, a layer-0 primary device has a signature capability. When a layer-0 device is replaced, for another device that has a communication relationship with the layer-0 device, the layer-0 primary device may alternatively update a signed trust table. Specifically, as shown in FIG. 22, details are as follows:
X501: An electrical inspection device activates the layer-0 primary device to perform a signed trust table update process.
   For example, the electrical inspection device is connected to the layer-0 primary device and indicates to the layer-0 primary device that a ZC 1' is an updated new device.
X502: The layer-0 primary device requests a signature certificate from the ZC 1'.
X503: The ZC 1' sends the signature certificate (and/or an SN) of the ZC 1' to the layer-0 primary device.
X504: The layer-0 primary device verifies the signature certificate of the ZC 1', generates a trust table for the ZC 1' based on the signature certificate of the ZC 1', and updates a trust table of another layer-0 device that communicates with the ZC 1'.
   In some possible implementations, because the ZC 1' is used to replace a ZC 1, the layer-0 primary device only needs to import content in a trust table of the ZC 1 into the trust table of the ZC 1', and replace, with public key information of the ZC 1', public key information of the ZC 1 in a trust table that has information about the ZC 1 and that is of another layer-0 device.
X505: The layer-0 primary device signs the trust table.
   For example, the layer-0 primary device signs each trust table by using a proxy signed private key of the layer-0 primary device, to generate a plurality of signed trust tables.
X506: The layer-0 primary device sends a signed trust table to the ZC 1', and separately sends signed trust tables of other layer-0 devices that need to communicate with the ZC 1' to the corresponding layer-0 devices, so that the layer-0 devices update signed trust tables.

In some possible implementations, if an updated device is the layer-0 primary device, for example, a CDC, and it is assumed that a new device is a CDC', the CDC' needs to apply for a new signature certificate. Because the CDC' is used to replace the CDC, the CDC' only needs to import content in a trust table and a communication matrix of the CDC' into the CDC'. Then, the CDC' updates trust tables of all other devices that have trust relationships with the original CDC based on the communication matrix.

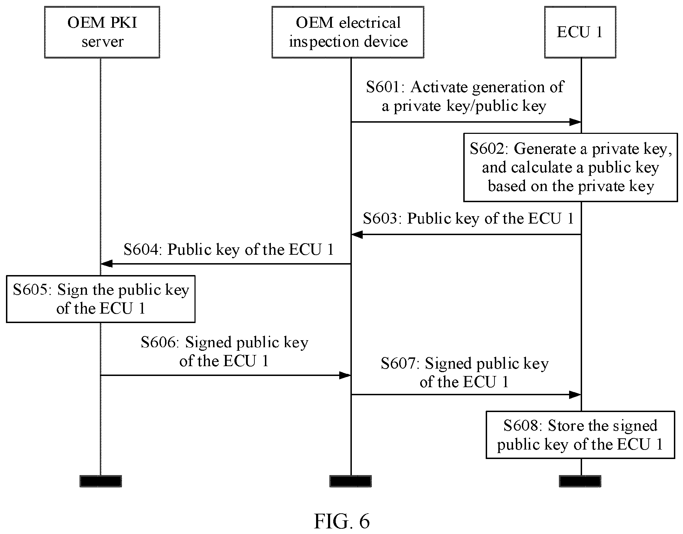

FIG. 6 is a schematic flowchart of a communication method according to an embodiment of this application. More specifically, FIG. 6 shows a key generation method in a layer-1 device. The method is similar to a key generation method in a layer-0 device. In this embodiment of this application, a controller ECU 1 in the layer-1 device is used as an example for description. The method may specifically include the following steps.

S601: An OEM electrical inspection device activates generation of a public key/private key.

For example, when the electrical inspection device is connected to the layer-1 device, the layer-1 device is activated to generate a public key/private key pair.

S602: The ECU 1 generates a private key, and calculates a public key based on the private key.

For example, the ECU 1 generates a key "s1" and a corresponding public key G^s1 in security hardware.

S603: The ECU 1 sends the public key to the OEM electric inspection device.

For example, the ECU 1 sends the public key G^s1 to the OEM electrical inspection device, and retains the private key "s1" in the security hardware.

S604: The OEM electrical inspection device sends the public key to a PKI server.

S605: The PKI server signs the public key of the ECU 1.

In some embodiments, the PKI server signs the public key G^s1 by using a private key of the PKI as a certificate, to generate a signed public key CERT_G^s1 of the ECU 1.

It should be noted that the signed public key CERT_G^s1 of the ECU 1 is essentially a signature certificate including the public key of the ECU 1. Herein, to be distinguished from a signature certificate of the layer-0 device, a signature certificate of the layer-1 device is referred to as the signed public key of the ECU 1.

S606: The PKI server sends the signed public key of the ECU 1 to the OEM electrical inspection device.

S607: The OEM electrical inspection device sends the signed public key of the ECU 1 to the ECU 1.

S608: The ECU 1 stores the signed public key of the ECU 1.

Optionally, the OEM may perform the method shown in FIG. 6 during vehicle production. It should be understood that, for each layer-1 device, the method shown in FIG. 6 may be used to generate a private key/public key pair and obtain a signature certificate of a public key.

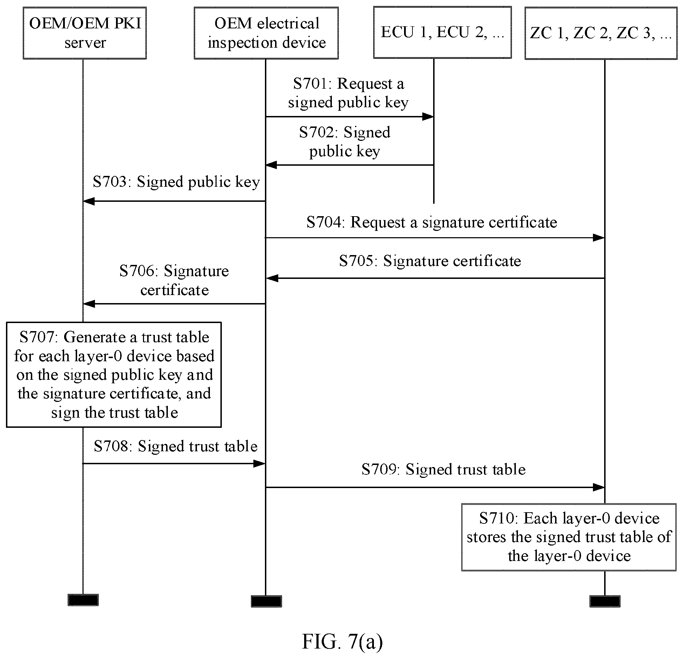

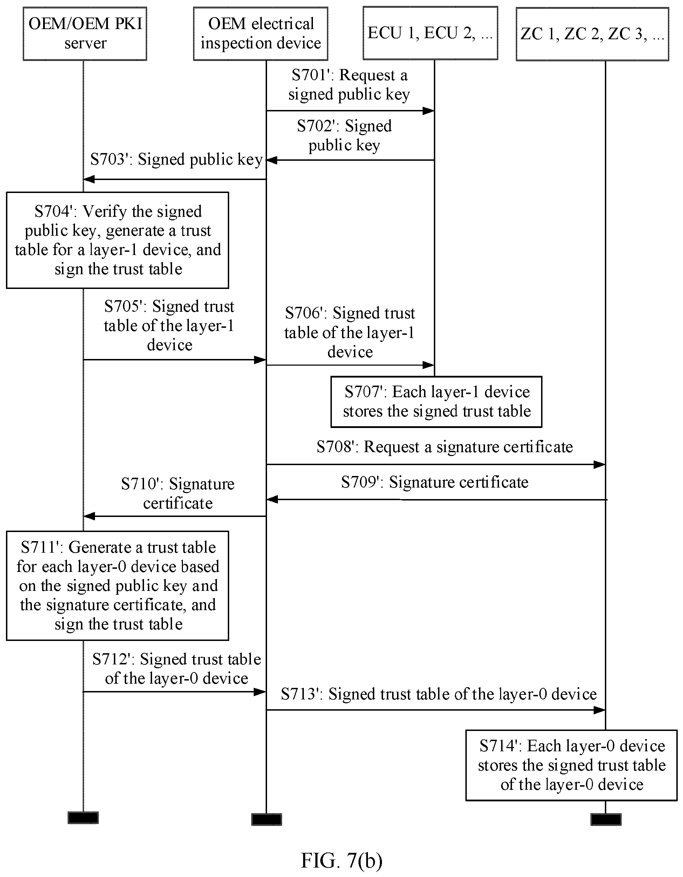

FIG. 7(a) and FIG. 7(b) are a schematic flowchart of a communication method according to an embodiment of this application. More specifically, FIG. 7(a) shows a method for generating, by a layer-0 device, a trust table including information about a layer-1 device. The method may include the following steps.

S701: An OEM electrical inspection device requests a signed public key from the layer-1 device.

S702: The layer-1 device sends the signed public key to the OEM electrical inspection device.

For example, each layer-1 device sends a signature certificate of the layer-1 device to the OEM electrical inspection device. For example, if layer-1 devices include an ECU 1, an ECU 2, and an ECU 3, the ECU 1, the ECU 2, and the ECU 3 send respective signature certificates to the inspection device. For example, the ECU 1 sends a signed public key CERT_G^s1 to the OEM electrical inspection device; the ECU 2 sends a signature certificate CERT_G^s2 to the OEM electrical inspection device; and the ECU 3 sends a signature certificate CERT_G^s3 to the OEM electrical inspection device.

S703: The OEM electrical inspection device sends the signed public key to an OEM/OEM PKI server.

More specifically, the OEM electrical inspection device sends the signed public key to the OEM, so that the OEM subsequently generates a trust table based on the signed public key.

S704: The OEM electrical inspection device requests a signature certificate from the layer-0 device.

S705: The layer-0 device sends the signature certificate to the OEM electrical inspection device.

For example, each layer-0 device sends the signature certificate of the layer-0 device to the OEM electrical inspection device. For example, if layer-0 devices include a ZC 1, a ZC 2, and a ZC 3, the ZC 1, the ZC 2, and the ZC 3 send respective signature certificates to the inspection device. For example, the ZC 1 sends a signature certificate CERT _PK_ ZC1 to the OEM electrical inspection device, the ZC 2 sends a signature certificate CERT_PK_ ZC2 to the OEM electrical inspection device, and the ZC 3 sends a signature certificate CERT_PK_ ZC3 to the OEM electrical inspection device.

S706: The OEM electrical inspection device sends the signature certificate to the OEM/OEM PKI server.

More specifically, the OEM electrical inspection device sends the signature certificate to the OEM, so that the OEM subsequently generates a trust table based on the signature certificate.

S707: The OEM/OEM PKI server generates a trust table for each layer-0 device based on the signed public key and the signature certificate, and signs the trust table.

For example, the OEM verifies the signed public key and the signature certificate, and generates a trust table for each layer-0 device based on a communication matrix, the signed public key, and the signature certificate. It should be understood that the trust table includes public key information of another layer-0 device and another layer-1 device that have a communication requirement with the layer-0 device. For example, the ZC 1 communicates with the ZC 2, the ZC 3, the ECU 1, and the ECU 2, and the ZC 2 communicates with the ZC 1, a ZC 4, the ECU 3, and an ECU 4. Therefore, a trust table of the ZC 1 includes public key information of the ZC 2, the ZC 3, the ECU 1, and the ECU 2, and a VIN; and a trust table of the ZC 2 includes public key information of the ZC 1, the ZC 4, the ECU 3, and the ECU 4, and the VIN. The public key information may be in a form of an ID of a signature certificate, or may be in a form of a signature certificate, or may be in a form of a public key hash. In addition, the trust table may further include a constant point G of a generation point, to calculate a public key based on a private key. In some possible implementations, the trust table may not include the constant point G of the generation point. Instead, the constant point G of the generation point is stored in a secure environment of the layer-0 device and/or the layer-1 device.

In addition, for the layer-0 device ZC 1, a trust table including information about the layer-0 device and the layer-1 device may be generated, as shown in Table 3. For the layer-0 device ZC 2, a trust table including information about the layer-0 device and the layer-1 device may also be generated, as shown in Table 4. Alternatively, for the layer-0 device, two trust tables are generated, where one trust table includes only information about the layer-0 device (as shown in Table 5), and the other trust table includes only information about the layer-1 device (as shown in Table 6). It should be understood that the trust table in the latter form is more easily updated when the layer-0 device or the layer-1 device is replaced.

**Table 3 Trust table of the ZC 1**

| | |
|---|---|
| VIN | CertID_ZC2, CertID_ZC3, G, Cert_G^s1, Cert_G^s2, - - - - |

**Table 4 Trust table of the ZC 2**

| | |
|---|---|
| VIN | CertID_ZC1, CertIDZC4, G, Cert_G^s3, Cert_G^s4, - - - - |

**Table 5 One trust table of the ZC 1**

| | |
|---|---|
| VIN | CertID ZC2, CertIDZC3, - - - - |

**Table 6 Another trust table of the ZC 1**

| | |
|---|---|
| VIN | G, Cert_G^s1, Cert_G^s2, - - - - |

In some possible implementations, the trust table of the layer-0 device may further include an SN of the layer-1 device. For example, the trust table of the ZC 1 may further include an SN of the ECU 1 and an SN of the ECU 2, and the trust table of the ZC 2 may further include an SN of the ECU 3 and an SN of the ECU 4.

Further, the OEM sends the trust tables to the OEM PKI server. The PKI server signs the trust tables and sends signed trust tables back to the OEM.

S708: The OEM/OEM PKI server sends the signed trust tables to the OEM electrical inspection device.

The electrical inspection device receives the signed trust table of each layer-0 device.

S709: The OEM electrical inspection device sends the signed trust tables to the layer-0 devices.

It should be understood that the OEM electrical inspection device sends a signed trust table to a corresponding layer-0 device, for example, sends a signed trust table of the ZC 1 to the ZC 1, and sends a signed trust table of the ZC 2 to the ZC 2.

S710: The layer-0 devices store the signed trust tables.

For example, the trust table of the ZC 1 is stored in the ZC 1, and this rule also applies to other trust tables.

In some possible implementations, a trust table including information about the layer-0 device may be further generated for the layer-1 device. A specific method is shown in FIG. 7(b). The method may include the following steps.

S701': An OEM electrical inspection device requests a signed public key from the layer-1 device.

S702': The layer-1 device sends the signed public key to the OEM electrical inspection device.

For example, for this step, refer to the descriptions in S702. Details are not described herein again.

S703': The OEM electrical inspection device sends the signed public key to an OEM/OEM PKI server.

For example, for this step, refer to the descriptions in S703. Details are not described herein again.

S704': The OEM/OEM PKI server verifies the signed public key, generates a trust table for the layer-1 device, and signs the trust table.

For example, the OEM verifies the signed public key, and generates a trust table for each layer-1 device based on a communication matrix and the signed public key. It should be understood that the trust table includes public key information of another layer-0 device that has a communication requirement with the layer-1 device. For example, an ECU 1 communicates with a ZC 1. Therefore, a trust table of the ECU 1 includes a public key of the ZC 1 (for example, G^zc1) and a VIN, as shown in Table 7. In addition, the trust table may further include a constant point G of a generation point, to calculate a public key based on a private key. In some possible implementations, the trust table may not include the constant point G of the generation point. Instead, the constant point G of the generation point is stored in a secure environment of the layer-0 device and/or the layer-1 device.

**Table 7 Trust table of the ECU 1**

| | |
|---|---|
| VIN | G, G^zc1 |

In some possible implementations, the trust table of the layer-1 device may further include an SN of a layer-0 device that communicates with the layer-1 device. For example, the trust table of the ECU 1 may further include an SN of the ZC 1.

Further, the OEM sends the trust tables to the OEM PKI server. The PKI server signs the trust tables and sends signed trust tables back to the OEM.

S705': The OEM/OEM PKI sends the signed trust table of the layer-1 device to the OEM electrical inspection device.

S706': The OEM electrical inspection device sends the signed trust table of the layer-1 to the layer-1 device.

It should be understood that the OEM electrical inspection device sends a signed trust table to a corresponding layer-1 device, for example, sends a signed trust table of the ECU 1 to the ECU 1, and sends a signed trust table of an ECU 2 to the ECU 2.

S707': The layer-1 device stores the signed trust table.

For example, the trust table of the ECU 1 is stored in the ECU 1, and this rule also applies to other trust tables.

S708': The OEM electrical inspection device requests a signature certificate from the layer-0 device.

S709': The layer-0 device sends the signature certificate to the OEM electrical inspection device.

For example, for this step, refer to the descriptions in S705. Details are not described herein again.

S710': The OEM electrical inspection device sends the signature certificate to the OEM/OEM PKI server.

For example, for this step, refer to the descriptions in S706. Details are not described herein again.

S711': The OEM/OEM PKI server generates a trust table for each layer-0 device based on the signed public key and the signature certificate, and signs the trust table.

For example, for this step, refer to the descriptions in S707. Details are not described herein again.

S712': The OEM/OEM PKI server sends the signed trust table of the layer-0 device to the OEM electrical inspection device.

The electrical inspection device receives the signed trust table of each layer-0 device.

S713': The OEM electrical inspection device sends the signed trust table of the layer-0 device to the layer-0 device.

It should be understood that the OEM electrical inspection device sends a signed trust table to a corresponding layer-0 device, for example, sends a signed trust table of the ZC 1 to the ZC 1, and sends a signed trust table of a ZC 2 to the ZC 2.

S714': The layer-0 device stores the signed trust table.

For example, the trust table of the ZC 1 is stored in the ZC 1, and this rule also applies to other trust tables.

It should be understood that, in the method shown in FIG. 7(b), the trust table (or the signed trust table) generated for the layer-0 device may be consistent with the trust table generated for the layer-0 device in the method shown in FIG. 7(a).

It should be noted that, in some possible implementations, S704' to S706' need to be performed after S710', that is, performed after the OEM obtains the signature certificate of the layer-0 device. For example, if the trust table generated for the layer-1 device needs to include a signature certificate or a signature certificate ID of a layer-0 device that needs to communicate with the layer-1 device, S704' to S706' need to be performed after S710'.

In the communication method provided in this embodiment of this application, the layer-0 device or the layer-1 device can establish a "trust relationship" based on the trust table, and can perform, by using public key information included in the trust table, identity verification on another device that needs to communicate with the layer-0 device or the layer-1 device, and establish secure communication with the device. In this process, participation of any other third party is not required, and security threats caused by external access can be effectively avoided.

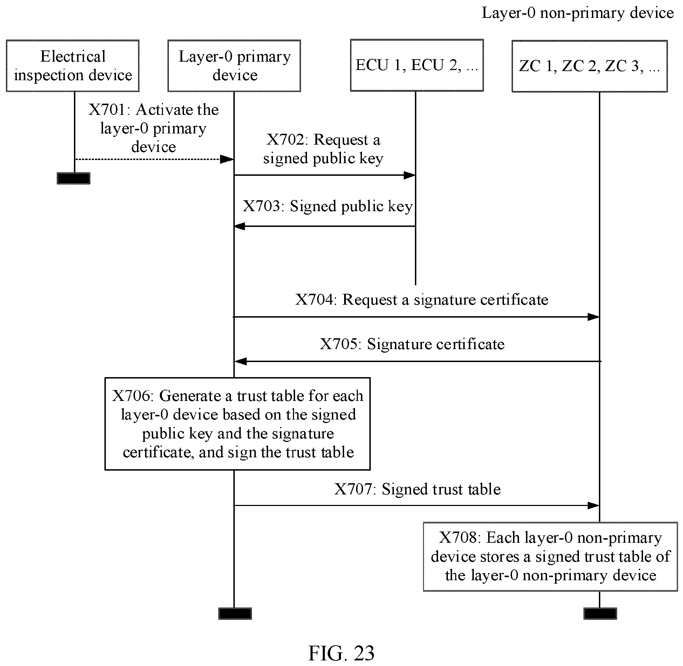

In some possible implementations, if a layer-0 primary device has a signature capability, a process of generating, for a layer-0 device, a trust table including information about a layer-1 device may alternatively be implemented by the layer-0 primary device. Specifically, as shown in FIG. 23, details are as follows:
X701: An electrical inspection device activates the layer-0 primary device.
X702: The layer-0 primary device requests a signed public key from the layer-1 device.
X703: The layer-1 device sends the signed public key to the layer-0 primary device.
   For example, for a specific procedure in which the layer-1 device sends the signed public key to the layer-0 primary device, refer to the descriptions in S702. Details are not described herein again.
X704: The layer-0 primary device requests a signature certificate from a layer-0 non-primary device.
X705: The layer-0 non-primary device sends the signature certificate to the layer-0 primary device.
   For example, for a specific procedure in which the layer-0 non-primary device sends the signature certificate to the layer-0 primary device, refer to the descriptions in S705. Details are not described herein again.
X706: The layer-0 primary device generates a trust table for each layer-0 device based on the signed public key and the signature certificate, and signs the trust table.

For example, the layer-0 primary device signs the trust table by using a proxy signed private key to obtain a signed trust table.

For example, the layer-0 primary device verifies the signed public key and the signature certificate, and generates a trust table for each layer-0 device based on a communication matrix, the signed public key, and the signature certificate. It should be understood that the trust table includes public key information of another layer-0 device and another layer-1 device that have a communication requirement with the layer-0 device.

For example, for a method for generating the trust table and a form of the generated trust table, refer to the descriptions in S707. Details are not described herein again.

X707: The layer-0 primary device sends the signed trust table to the layer-0 non-primary device.

It should be understood that the layer-0 primary device sends a signed trust table to a corresponding layer-0 device, for example, sends a signed trust table of a ZC 1 to the ZC 1, and sends a signed trust table of a ZC 2 to the ZC 2.

X708: The layer-0 non-primary device stores the signed trust table.

For example, the trust table of the ZC 1 is stored in the ZC 1, and this rule also applies to other trust tables.

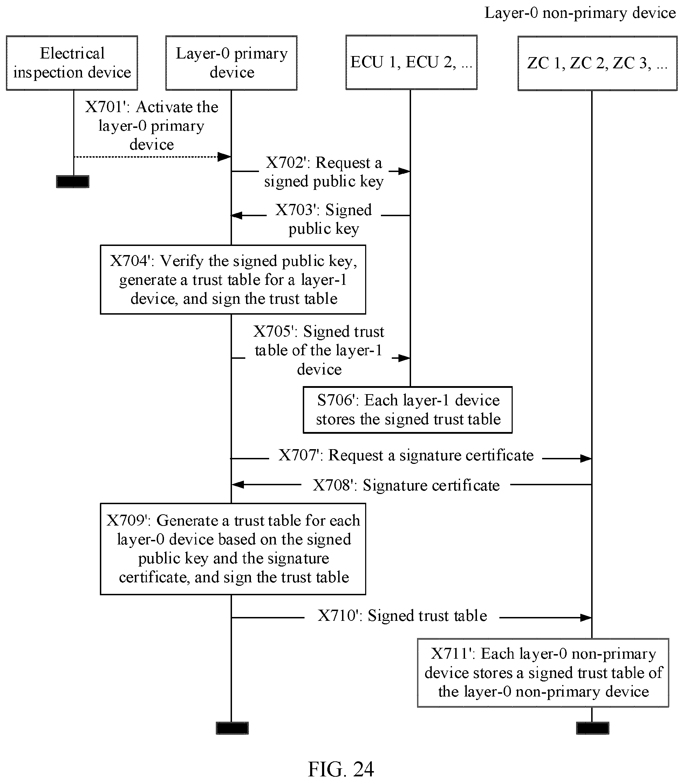

In some possible implementations, if a layer-0 primary device has a signature capability, a process of generating, for a layer-1 device, a trust table including information about a layer-0 device may alternatively be implemented by the layer-0 primary device. Specifically, as shown in FIG. 24, details are as follows:
X701: An electrical inspection device activates the layer-0 primary device.
X702': The layer-0 primary device requests a signed public key from the layer-1 device.
X703': The layer-1 device sends the signed public key to the layer-0 primary device.
   For example, for this step, refer to the descriptions in S702. Details are not described herein again.
X704': The layer-0 primary device verifies the signed public key, generates a trust table for the layer-1 device, and signs the trust table.
   For example, for a method for generating the trust table and a form of the generated trust table, refer to the descriptions in S704'. Details are not described herein again.
X705': The layer-0 primary device sends the signed trust table of the layer-1 to the layer-1 device.
   It should be understood that the OEM electrical inspection device sends a signed trust table to a corresponding layer-1 device, for example, sends a signed trust table of an ECU 1 to the ECU 1, and sends a signed trust table of an ECU 2 to the ECU 2.
X706': The layer-1 device stores the signed trust table.
   For example, the trust table of the ECU 1 is stored in the ECU 1, and this rule also applies to other trust tables.
X707': The layer-0 primary device requests a signature certificate from a layer-0 non-primary device.
X708': The layer-0 non-primary device sends the signature certificate to the layer-0 primary device.
   For example, for this step, refer to the descriptions in S705. Details are not described herein again.
X709': The layer-0 primary device generates a trust table for each layer-0 device based on the signed public key and the signature certificate, and signs the trust table.
   For example, for this step, refer to the descriptions in X706. Details are not described herein again.
X710': The layer-0 primary device sends a signed trust table of each layer-0 non-primary device to the corresponding layer-0 non-primary device.
   It should be understood that the layer-0 primary device sends a signed trust table to a corresponding layer-0 non-primary device, for example, sends a signed trust table of a ZC 1 to the ZC 1, and sends a signed trust table of a ZC 2 to the ZC 2.
X711': The layer-0 non-primary device stores the signed trust table.

For example, the trust table of the ZC 1 is stored in the ZC 1, and this rule also applies to other trust tables.

It should be understood that, in the method shown in FIG. 24, the trust table (or the signed trust table) generated for the layer-0 device may be consistent with the trust table generated for the layer-0 device in the method shown in FIG. 23.

It should be noted that, in some possible implementations, X704' to X706' need to be performed after X708', that is, performed after the layer-0 primary device obtains the signature certificate of the layer-0 non-primary device. For example, if the trust table generated for the layer-1 device needs to include a signature certificate or a signature certificate ID of a layer-0 device that needs to communicate with the layer-1 device, X704' to X706' need to be performed after X708'.

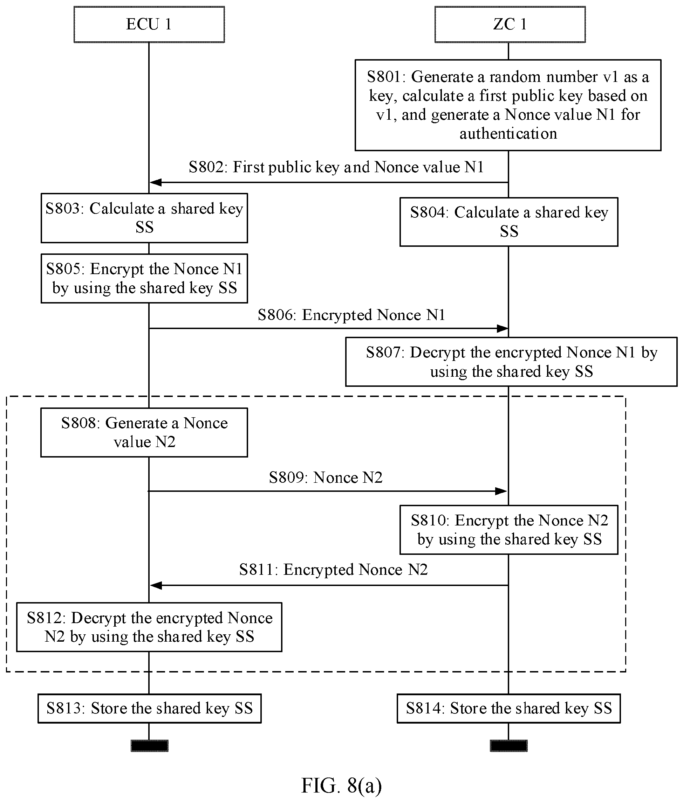

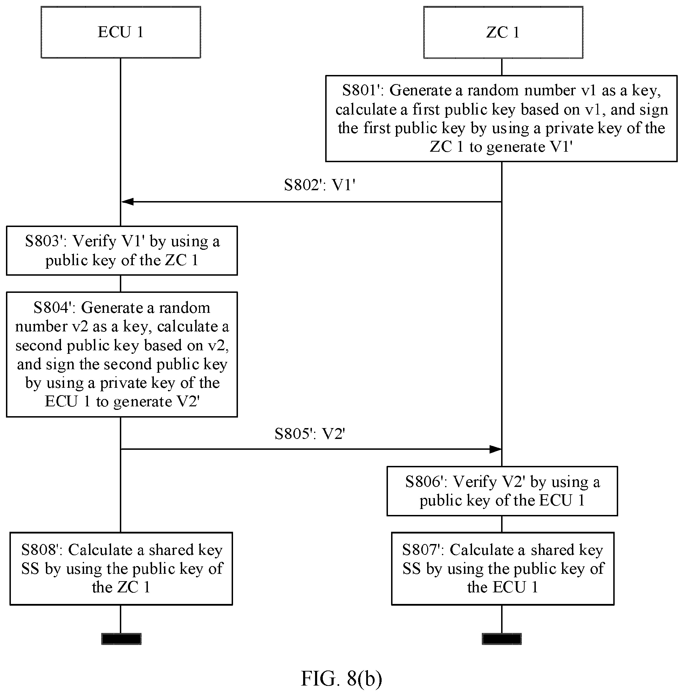

FIG. 8(a) and FIG. 8(b) are a schematic flowchart of a communication method according to an embodiment of this application. More specifically, FIG. 8(a) shows a method for calculating a PSK between a layer-0 device and a layer-1 device based on a trust table of the layer-0 device when the layer-1 device does not have a trust table. The method may include the following steps.

S801: A ZC 1 generates a random number v1 as a key, calculates a first public key based on v1, and generates a Nonce value N1 for authentication.

In some possible implementations, based on a trust table of the ZC 1, the ZC 1 needs to communicate with an ECU 1, and vice versa. Therefore, a shared key (for example, a PSK) needs to be calculated between the ZC 1 and the ECU 1, to be used for session encryption in a subsequent communication process. For example, the ZC 1 generates the random number v1 as a key, and calculates the first public key as G^v1 based on the random number v1. For example, the key and the public key may be a DH key pair.

In addition, the ZC 1 generates the Nonce value N1, where N1 is subsequently used to authenticate the ECU 1. It should be understood that Nonce is an arbitrary or non-repetitive random value that is used only once.

S802: The ZC 1 sends the first public key and the Nonce value N1 to the ECU 1.

It should be understood that the ZC 1 may send the first public key and the Nonce value N1 at a time, or may send the first public key and the Nonce value N1 separately.

S803: The ECU 1 calculates a shared key SS.

For example, the ECU 1 may calculate a second public key G^v1s1 by using the first public key and a private key s1 of the ECU 1. Further, the shared key SS is calculated based on the second public key: SS=F(G^v1s1). Herein, F may be a key derivation function or a simple hash function.

S804: The ZC 1 calculates a shared key SS.

In some possible implementations, the ZC 1 determines the public key G^s1 of the ECU 1 based on the trust table. Further, the shared key SS is calculated based on the public key G^s1 of the ECU 1 and a random number v2: SS=F(G^v1s1).

S805: The ECU 1 encrypts the Nonce N1 by using the shared key SS.

To perform identity verification and ensure that shared keys SS generated by both parties are the same, the ECU 1 may encrypt Nonce N1 by using SS.

S806: The ECU 1 sends the encrypted Nonce N1 to the ZC 1.

S807: The ZC 1 decrypts the encrypted Nonce N1 by using the shared key SS.

For example, the ZC 1 decrypts the encrypted Nonce N1 by using SS to obtain N1. Successful decryption proves that the ZC 1 and the ECU 1 have the same shared key SS.

S808: The ECU 1 generates a Nonce value N2.

S809: The ECU 1 sends the Nonce value N2 to the ZC 1.

S810: The ZC 1 encrypts Nonce N2 by using the shared key SS.

S811: The ZC 1 sends the encrypted Nonce N2 to the ECU 1.

S812: The ECU 1 decrypts the encrypted Nonce N2 by using the shared key SS.

The ECU 1 decrypts the encrypted Nonce N2 by using SS to obtain N2. Successful decryption completes bidirectional identity verification and shared key confirmation.

S813: The ECU 1 stores the shared key SS.

S814: The ZC 1 stores the shared key SS.

It should be noted that S808 to S812 are optional. In some embodiments, S813 and S814 may be performed simultaneously, or may be performed sequentially. For example, S814 may be performed before S813. S803 and S804 may also be performed simultaneously or sequentially. For example, S804 may be performed before S803, or S804 may be performed before S802 or S803.

It should be understood that the foregoing process is the same for all layer-0 and layer-1 devices that need to calculate a PSK. The shared key SS is subsequently used to generate a new session key during vehicle running.

In some possible implementations, when a layer-1 device stores a trust table, a method for calculating a PSK between a layer-0 device and the layer-1 device may be based on the layer-0 device and the trust tables of the layer-1 device. As shown in FIG. 8(b), the method may include the following steps.

S801': A ZC 1 generates a random number v1 as a key, calculates a first public key based on v1, and signs the first public key by using a private key of the ZC 1 to generate V1'.

In some possible implementations, based on a trust table of the ZC 1, the ZC 1 needs to communicate with an ECU 1, and vice versa. Therefore, a shared key (for example, a PSK) needs to be calculated between the ZC 1 and the ECU 1, to be used for session encryption in a subsequent communication process. For example, the ZC 1 generates the random number v1 as a key, and calculates the first public key as G^v1 based on the random number v1. For example, the key and the public key may be a DH key pair. Further, the ZC 1 signs the first public key by using the private key zc1 of the ZC 1 to generate V1': V1'=Sign(G^v1, zc1).

S802': The ZC 1 sends V1' to the ECU 1.

S803': The ECU 1 verifies V1' by using a public key of the ZC 1.

For example, the ECU 1 may obtain the public key of the ZC 1 based on the trust table.

It should be understood that when V1' is successfully verified, it is proved that an identity of the ZC 1 is valid.

S804': The ECU 1 generates a random number v2 as a key, calculates a second public key G^v2 based on v2, and signs the second public key by using a private key of the ECU 1 to generate V2'.

For example, V2'=Sign(G^v2, s1).

S805': The ECU 1 sends V2' to the ZC 1.

S806': The ZC 1 verifies V2' by using a public key of the ECU 1.

For example, the ZC 1 may obtain the public key of the ECU 1 based on the trust table.

It should be understood that when V2' is successfully verified, it is proved that an identity of the ECU 1 is valid.

S807': The ZC 1 calculates a shared key SS by using the public key of the ECU 1.

For example, the ZC 1 calculates the shared key SS by using the public key of the ECU 1 and the random number v2: SS=F(G^v1v2).

S808': The ECU 1 calculates a shared key SS by using the public key of the ZC 1.

For example, the ECU 1 calculates the shared key SS by using the public key of the ZC 1 and the random number v1: SS=F(G^v1v2).

In some possible implementations, S807' and S808' may be performed simultaneously, or may be performed sequentially. For example, S808' may be performed before S807', or S808' may be performed before S802 or S804'.

It should be understood that in FIG. 8(a) and FIG. 8(b), generating a PSK is used as an example for description. In some possible implementations, the method procedures shown in FIG. 8(a) and FIG. 8(b) may also be used to generate another security key, for example, a diagnostic key, a security onboard communication SecOC key, or another application key.

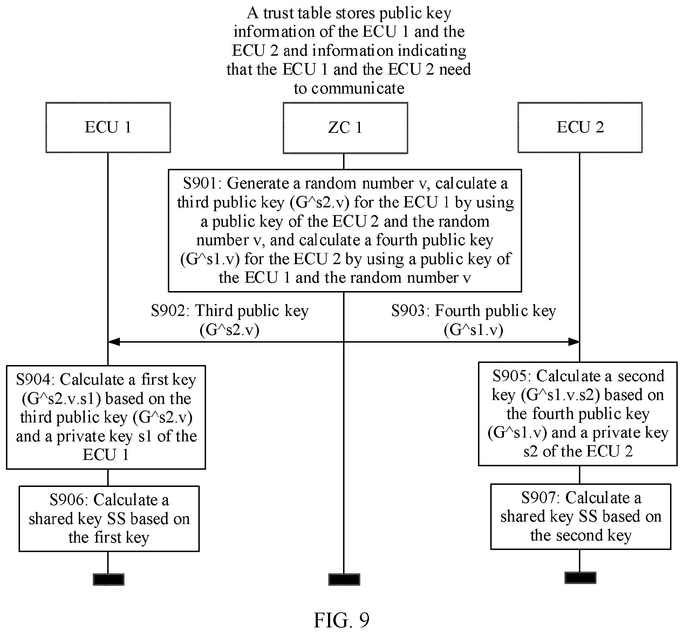

FIG. 9 is a schematic flowchart of a communication method according to an embodiment of this application. More specifically, FIG. 9 shows a method for calculating a PSK between layer-1 devices. It should be understood that, because a layer-1 device ECU 1 and a layer-1 device ECU 2 do not have public key information of each other, and do not have another means of mutual authentication, and a layer-0 device ZC 1 stores public key information of the ECU 1 and the ECU 2 and information indicating that the ECU 1 needs to communicate with the ECU 2, the ZC 1 may be used as a "middleman" to assist the ECU 1 and the ECU 2 in calculating the PSK. The method may include the following steps.

S901: The ZC 1 generates a random number v, calculates a third public key (G^s2.v) for the ECU 1 by using a public key of the ECU 2 and the random number v, and calculates a fourth public key (G^s1.v) for the ECU 2 by using a public key of the ECU 1 and the random number v.

For example, the random number v and the third public key (G^s2.v) form a DH key pair, and the random number v and the fourth public key (G^s1.v) form a DH key pair.

S902: The ZC 1 sends the public key (G^s2.v) to the ECU 1.

S903: The ZC 1 sends the public key (G^s1.v) to the ECU 2.

S904: The ECU 1 calculates a first key (G^s2.v.s1) based on the third public key (G^s2.v) and a key s1 of the ECU 1.

S905: The ECU 2 calculates a second key (G^s1.v.s2) based on the fourth public key (G^s1.v) and a key s2 of the ECU 2.

It should be understood that, in this case, both the ECU 1 and the ECU 2 calculate a same key value. Because the ZC 1 does not know the key s1 of the ECU 1 and the key s2 of the ECU 2, the ZC 1 cannot calculate the key G^s1.s2.v. In this way, a shared key calculated by the ECU 1 and the ECU 2 based on the same key value is not known by a third party, so that communication security can be ensured.

S906: The ECU 1 exports a shared key SS.

S907: The ECU 2 exports a shared key SS.

For example, both the ECU 1 and the ECU 2 may use an F function to calculate a DH key (namely, the shared key SS). For example, SS=F(G^s1.s2.v). The shared key SS is used to generate a new session key during vehicle running.

In some possible implementations, the ECU 1 and the ECU 2 may further complete identity verification and key confirmation by exchanging Nonce values encrypted by using SS. Successful decryption completes bidirectional identity verification and key confirmation.

Layer-1 and/or layer-0 devices with a same PSK may verify each other by using the PSK, and a pre-shared key is securely stored in security hardware and is known only to each party. If two communicating parties prove that both know the PSK, the identity verification is complete. Further, both parties may use a Diffie-Hellman key exchange protocol or any other such protocols to calculate a new session key. When this step ends, both parties have the new session key to encrypt communication content and/or calculate message identity verification information.

It should be understood that in FIG. 9, generating a PSK is used as an example for description. In some possible implementations, the method procedure shown in FIG. 9 may also be used to generate another security key, for example, a diagnostic key, a security onboard communication SecOC key, or another application key.

As described above, a service life of a vehicle is as long as several decades, and a device in the vehicle may be damaged and need to be replaced during this period. A new layer-1 device further needs a key to perform secure communication, and a trust table further needs to be updated for the new device and other devices that have a direct communication relationship with the new device. It should be understood that, after the layer-1 device is replaced, a process of performing a key signature and a trust table update on the new layer-1 device is similar to that of a layer-0 device. For details, refer to the descriptions in the foregoing embodiments. Details are not described herein again.

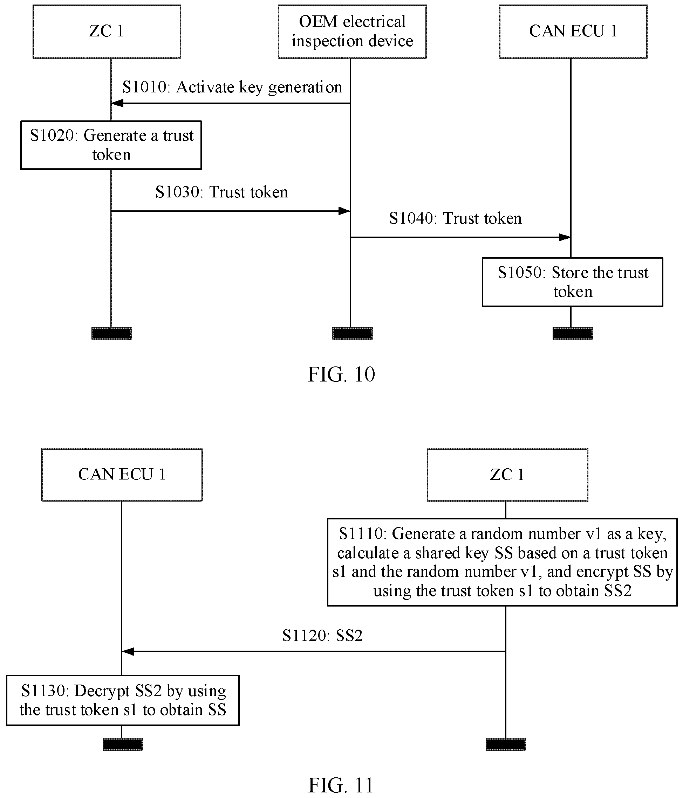

It is considered that layer-2 devices are resource-limited devices and do not have security hardware. Therefore, encryption capabilities of these devices are limited. Only 8-byte data can be exchanged in a CAN frame. Therefore, these devices require only lightweight symmetric key-based solutions. FIG. 10 shows a method for forming a pre-embedded trust token of a layer-2 device (using a CAN ECU 1 as an example). The method may include the following steps.

S1010: Activate key generation.

For example, for this step, refer to the descriptions in S301 or S601. Details are not described herein again.

S1020: AZC 1 generates a trust token.

For example, the ZC 1 generates a trust token s1, and the trust token may be a random number, or may be a trust token in another form.

S1030: The ZC 1 sends the trust token to an OEM electrical inspection device.

S1040: The OEM electrical inspection device sends the trust token to the CAN ECU 1.

S1050: The CAN ECU 1 stores the trust token.

It should be understood that both the ZC 1 and the CAN ECU 1 store the trust token s1.

In some possible implementations, before the trust token is injected into the CAN ECU 1, the ZC 1 may perform authentication on the CAN ECU 1 based on at least one of an SN, a physical fingerprint, an authentication chip, and a security chip of the CAN ECU 1, and inject the trust token into the CAN ECU 1 after the authentication succeeds.

In some possible implementations, the trust token may alternatively be generated by the electrical inspection device, and then is separately "injected" into the ZC 1 and the CAN ECU 1, in other words, sent to the ZC 1 and the CAN ECU 1.

According to the communication method provided in this embodiment of this application, a trust token can be pre-embedded into a layer-2 device, so that injection of an external key can be avoided, key generation in a vehicle/component can be maximally maintained, and security of communication between a layer-0 device and the layer-2 device in the vehicle can be ensured.

FIG. 11 shows a method for forming a PSK between a layer-0 device and a layer-2 device, and the method may include the following steps.

S1110: A ZC 1 generates a random number v1 as a key, calculates a shared key SS based on a trust token and the random number v1, and encrypts SS by using the trust token s1, to obtain SS2.

S1120: The ZC 1 sends SS2 to a CAN ECU 1.

S1130: The CAN ECU 1 decrypts SS2 by using the trust token s1, to obtain SS.

Further, based on the shared key SS, the CAN ECU 1 and the ZC 1 may generate a new session key during vehicle running.

It should be noted that, after the CAN ECU 1 obtains SS, the CAN ECU 1 and the ZC 1 may further complete identity verification and key confirmation by exchanging Nonce values encrypted by using SS. Successful decryption of the Nonce values encrypted by using SS completes bidirectional identity verification and key confirmation. Further, both the CAN ECU 1 and the ZC 1 delete the trust token s1.

In some possible implementations, a trust table of a vehicle-mounted device in the foregoing embodiments may further include service-oriented architecture (service-oriented architecture, SOA) service information of another device communicating with the vehicle-mounted device. For example, the ZC 1 needs to communicate with a ZC 2 and a ZC 3, and SOA services supported by the ZC 2 include a service A, a service B, and a service C, but a service opened by the ZC 2 to the ZC 1 is only the service A. In this case, in addition to public key information of the ZC 2 and the ZC 3, the trust table of the ZC 1 may further include related information of the service A of the ZC 2. It should be understood that, in the foregoing case, the ZC 1 can access only the service A of the ZC 2, but cannot access the service B and the service C of the ZC 2. It should be understood that the "service" may be at least one of a device abstraction service, an atomic service, a composite service, or an application service.

To facilitate understanding, the following briefly describes the concepts related to the "service".
1. An SOA is an architecture design idea, which decomposes a system into relatively independent functional units. The relatively independent functional units are externally referred to as services, and services and abstract interfaces may be encapsulated. Further, these services communicate with each other by using defined interfaces and protocols. Services of a system may be classified based on layers. For example, bottom-layer services include a device abstraction service, an atomic service, and a composite service, and an upper-layer service is referred to as an app.
2. Atomic service. Generally, a sensor, an actuator, and the like are encapsulated as abstract hardware resources into an atomic service. Generally, the atomic service is encapsulated with the most basic logic functions, for example, seat control and window control.
3. The composite service is a service that is formed by invoking and combining atomic services.
4. The application service (or referred to as an app) is a service formed by invoking and combining atomic services and/or composite services and usually encapsulated with various application scenarios, and is a customer-oriented service.
5. The device abstraction service is a service in which hardware resources such as a sensor and an executor are abstracted, to provide a device access interface for an atomic service. The device abstraction service is generally encapsulated with electrical signals, such as power supply signals of a motor, Hall signals, and the like.

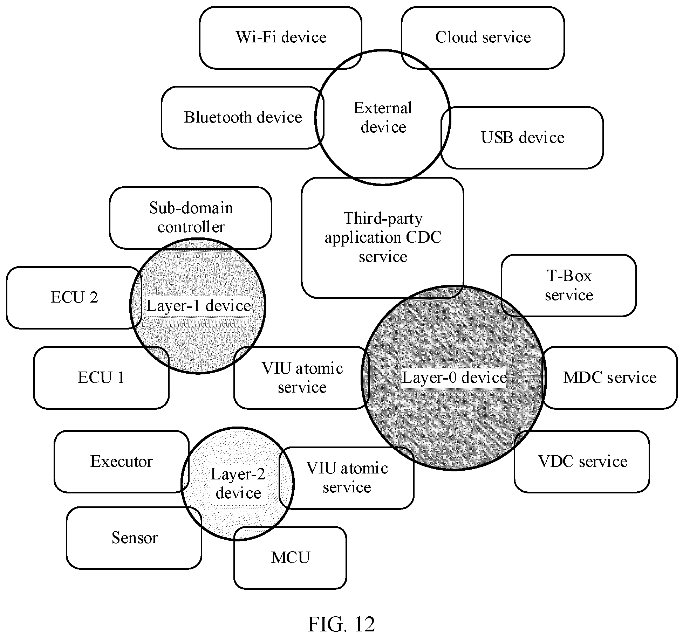

According to the communication method provided in this embodiment of this application, in a vehicle generation phase, a certificate associated with a vehicle identity (for example, a VIN) is applied for each layer-0 device and each layer-1 device, to ensure that the device is uniquely associated with a vehicle in which the device is located. Further, a device trust table is issued for each device based on the certificate of the device, to ensure that only authorized devices can access the device. Particularly, layer-0 devices form a layer-0 device trust ring based on the trust table. As shown in FIG. 12, each device on the ring may provide a different service for the outside of the ring. For example, the layer-0 device trust ring may provide a vehicle integration unit (vehicle integration unit, VIU) atomic service, a VDC enhancement service, an MDC enhancement service, and the like. The layer-0 device may further assist layer-1 devices and layer-2 devices in establishing a trust ring between the layer-1 devices and a trust ring between the layer-2 devices respectively. In some possible implementations, the layer-0 device may further assist an external device of the vehicle in establishing a trust ring. Further, when the device is started, validity of the device is verified by using a certificate of the device and the trust table. After the verification succeeds, a session key is distributed, and the session key is periodically refreshed, to improve security of the session key. When a service requires secure communication, a session key is used to establish secure communication, so as to ensure confidentiality and integrity of communication data. According to the communication method provided in this embodiment of this application, processing of the generated session key is closed-loop inside the vehicle, so that a key leakage risk can be greatly reduced, and key management complexity can be reduced.

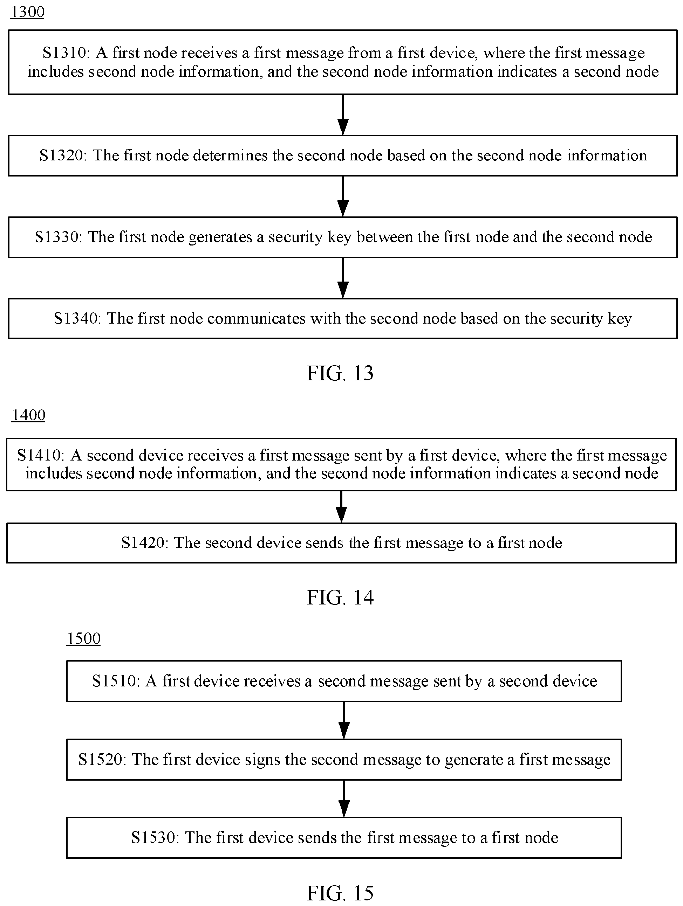

FIG. 13 is a schematic flowchart of a communication method 1300 according to an embodiment of this application. The method 1300 may be applied to the vehicle shown in FIG. 1, or may be performed by the ZC in the system shown in FIG. 2. The method 1300 includes the following steps.

S1310: A first node receives a first message from a first device, where the first message includes second node information, and the second node information indicates a second node.

S1320: The first node determines the second node based on the second node information.

S1330: The first node generates a security key between the first node and the second node.

S1340: The first node communicates with the second node based on the security key.

For example, the first node may be any layer-0 device in the foregoing embodiments, for example, the ZC 1. The second node may be a layer-0 device (for example, the ZC 2) in the foregoing embodiments, or may be a layer-1 device (for example, the ECU 1) in the foregoing embodiments. The first node and the second node may be disposed in a first terminal. The first terminal may be the vehicle in the foregoing embodiments, or may be another terminal.

For example, the first message may be the signed trust table in the foregoing embodiments, or may be a signature trustlist that is in another form (for example, a file) and that includes information about a node that has a communication requirement with the first node.

For example, the second node information may include at least one of the signature certificate ID of the second node, the signature certificate of the second node, or the public key hash of the second node in the foregoing embodiments, or may include public key information that is of the second node and that is in another form. It should be noted that when the second node information includes the public key hash of the second node, the second node information further includes identity information of the second node. For example, the identity information of the second node may be an SN of the second node, or may be other information that can indicate an identity of the second node.

For example, the first device may be the OEM PKI server in the foregoing embodiments, or may be a computing platform in the first terminal, for example, at least one of a VDC, an MDC, or a CDC, or may be another trusted device, for example, a vehicle control server ICAS 1, an intelligent driving server ICAS 2, an infotainment server ICAS 3, a BDC, an SAS, an MGU, an ADAS super core, or a CSC.

For example, the security key may be the PSK in the foregoing embodiments.

For example, for a method for generating the first message, refer to the descriptions in the foregoing embodiments. Details are not described herein again. For a method for generating the security key between the first node and the second node, refer to the descriptions in the foregoing embodiments. Details are not described herein again.

For example, that the first node communicates with the second node based on the security key may include: The first node generates, based on the security key, a session key for communicating with the second node, and further encrypts content of communication between the first node and the second node based on the session key.

In some possible implementations, the method 1300 may further include other methods performed by the layer-0 device in FIG. 3 to FIG. 11.

According to the communication method provided in this embodiment of this application, communication nodes establish a "trust relationship" between each other by using a first message. Further, the communication nodes may verify validity of an identity of each other by using the first message, and after the verification succeeds, negotiate a shared security key, and generate a session key for each time of communication by using the shared security key. When a service requires secure communication, a session key is used to establish secure communication. This helps ensure confidentiality and integrity of communication data.

FIG. 14 is a schematic flowchart of a communication method 1400 according to an embodiment of this application. The method 1400 includes the following steps.

S1410: A second device receives a first message sent by a first device, where the first message includes second node information, and the second node information indicates a second node.

For example, the second device may be the OEM in the foregoing embodiments. More specifically, the second device may be an OEM TSP.

S1420: The second device sends the first message to a first node.

For example, the second device sends the first message to the first node through an electrical inspection device.

In some possible implementations, the method 1400 may further include other methods performed by the OEM device in FIG. 3 to FIG. 11.

According to the communication method provided in this embodiment of this application, the OEM sends the first message including the second node information to the first node, so that a "trust relationship" is established between the first node and the second node. This helps the first node and the second node generate a session key based on the first message. Further, when a service requires secure communication, a session key is used to establish secure communication. This helps ensure confidentiality and integrity of communication data.

FIG. 15 is a schematic flowchart of a communication method 1500 according to an embodiment of this application. The method 1500 includes the following steps.

S1510: A first device receives a second message sent by a second device.

For example, the second message may be the trust table in the foregoing embodiments, or may be a trustlist that is in another form and that includes information about a node that has a communication requirement with a first node.

For example, the second message is generated by the second device based on a communication list and a signed public key of a second node.

For example, the communication list may include the communication matrix in the foregoing embodiments.

S1520: The first device signs the second message to generate a first message.

For example, for a specific method for generating the first message by signing the second message, refer to the descriptions in the foregoing embodiments. Details are not described herein again.

S1530: The first device sends the first message to the first node.

In some possible implementations, the method 1500 may further include other methods performed by the OEM PKI server in FIG. 3 to FIG. 11.

According to the communication method provided in this embodiment of this application, the first device generates a signed trust table by signing a trust table, so that the signed trust table cannot be easily changed by another device. This helps further improve communication security.

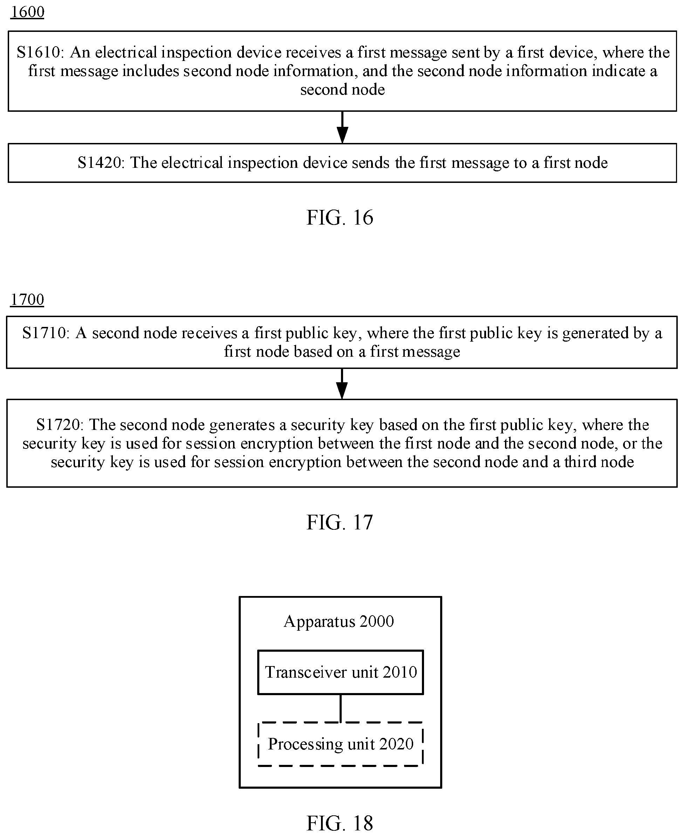

FIG. 16 is a schematic flowchart of a communication method 1600 according to an embodiment of this application. The method 1600 includes the following steps.

S1610: An electrical inspection device receives a first message sent by a first device, where the first message includes second node information, and the second node information indicates a second node.

For example, the electrical inspection device may be the electrical inspection device in the foregoing embodiments.

S1620: The electrical inspection device sends the first message to a first node.

In some possible implementations, the method 1600 may further include other methods performed by the electrical inspection device in FIG. 3 to FIG. 11.

According to the communication method provided in this embodiment of this application, the electrical inspection device sends the first message including the second node information to the first node, so that a "trust relationship" is established between the first node and the second node. This helps the first node and the second node generate a session key based on the first message. Further, when a service requires secure communication, using a session key for communication helps ensure confidentiality and integrity of communication data.

FIG. 17 is a schematic flowchart of a communication method 1700 according to an embodiment of this application. The method 1700 includes the following steps.

S1710: Receive a first public key, where the first public key is generated by a first node based on a first message, the first message includes second node information, and the second node information indicates a second node.

S1720: The second node generates a security key based on the first public key, where the security key is used for session encryption between the first node and the second node; or the security key is used for session encryption between the second node and a third node.

For example, the second node may be a layer-1 device that has a communication requirement with the first node in the foregoing embodiments, and the third node may be a layer-1 device that has a communication requirement with the second node in the foregoing embodiments.

For example, the first public key may be the first public key in the foregoing embodiments, or may be the third public key or the fourth public key in the foregoing embodiments.

For example, the security key may be the shared key SS in the foregoing embodiments.

In some possible implementations, the method 1700 may further include other methods performed by the layer-1 device in FIG. 3 to FIG. 11.

According to the communication method provided in this embodiment of this application, the layer-1 device may generate the security key based on the first public key sent by a layer-0 device. The security key may be used to generate a session key required for communication with the layer-0 device or the layer-1 device. This helps ensure confidentiality and integrity of communication data.

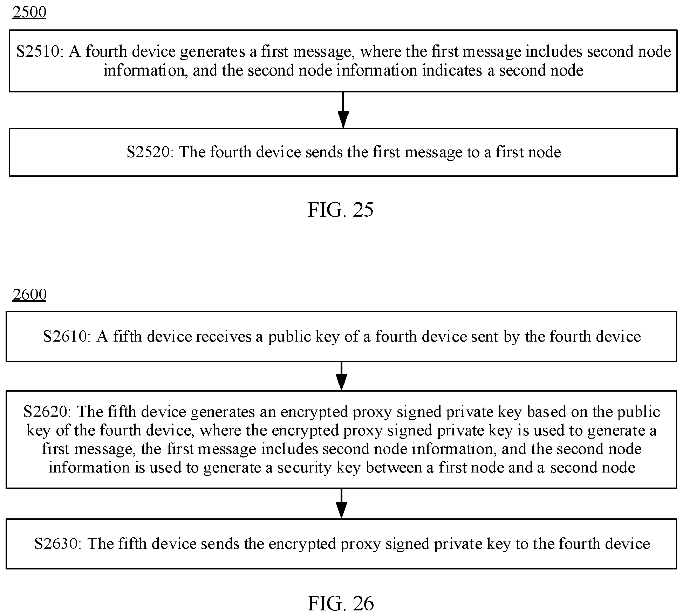

FIG. 25 is a schematic flowchart of a communication method 2500 according to an embodiment of this application. The method 2500 includes the following steps.

S2510: A fourth device generates a first message, where the first message includes second node information, and the second node information indicates a second node.

For example, the fourth device may include the layer-0 primary device in the foregoing embodiments.

For example, for a method for generating the first message, refer to the descriptions in the foregoing embodiments. Details are not described herein again.

S2520: The fourth device sends the first message to a first node.

Optionally, the fourth device sends a public key of the fourth device to a fifth device, where the public key of the fourth device is used to generate an encrypted proxy signed private key; and the fourth device receives the encrypted proxy signed private key.

For example, the fifth device may be the PKI server in the foregoing embodiments.

In some possible implementations, the fifth device and the first device are a same device.

Optionally, the fourth device generates a second message based on a signed public key of the second node and a communication list, where the communication list indicates that the first node and the second node need to communicate. That the fourth device generates a first message includes: The fourth device signs the second message to generate the first message.

Optionally, the fourth device decrypts the encrypted proxy signed private key by using the public key of the fourth device, to obtain a proxy signed private key. That the fourth device signs the second message to generate the first message includes: The fourth device signs the second message by using the proxy signed private key, to generate the first message.

Optionally, the fourth device receives a first signal from an electrical inspection device; and the fourth device sends request information to the second node based on the first signal, where the request information is used to request the signed public key of the second node.

In some possible implementations, the method 2500 may further include other methods performed by the primary node of the layer-0 device in FIG. 20 to FIG. 24.

FIG. 26 is a schematic flowchart of a communication method 2600 according to an embodiment of this application. The method 2600 includes the following steps.

S2610: A fifth device receives a public key of a fourth device sent by the fourth device.

S2620: The fifth device generates an encrypted proxy signed private key based on the public key of the fourth device, where the encrypted proxy signed private key is used to generate a first message, the first message includes second node information, and the second node information is used to generate a security key between a first node and a second node.

S2630: The fifth device sends the encrypted proxy signed private key to the fourth device.

In embodiments of this application, unless otherwise stated or there is a logical conflict, terms and/or descriptions in embodiments are consistent and may be mutually referenced, and technical features in different embodiments may be combined according to an internal logical relationship thereof, to form a new embodiment.

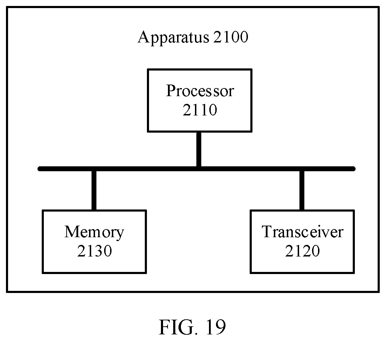

The foregoing describes in detail the methods provided in embodiments of this application with reference to FIG. 3 to FIG. 17. The following describes in detail apparatuses provided in embodiments of this application with reference to FIG. 18 and FIG. 19. It should be understood that descriptions of apparatus embodiments correspond to the descriptions of the method embodiments. Therefore, for content that is not described in detail, refer to the method embodiments. For brevity, details are not described herein again.

FIG. 18 is a block diagram of a communication apparatus 2000 according to an embodiment of this application. The apparatus 2000 includes a transceiver unit 2010 and a processing unit 2020.

Optionally, the apparatus 2000 may further include a storage unit. The storage unit may be configured to store instructions and/or data. The processing unit 2020 may read the instructions and/or data in the storage unit, to enable the apparatus to implement the foregoing method embodiments.

The apparatus 2000 may include units configured to perform the methods in FIG. 13 to FIG. 17. In addition, the units in the apparatus 2000 and the foregoing other operations and/or functions are separately used to implement corresponding procedures in the method embodiments in FIG. 13 to FIG. 17.

When the apparatus 2000 is configured to perform the method 1300 in FIG. 13, the transceiver unit 2010 may be configured to perform S1310 in the method 1300, and the processing unit 2020 may be configured to perform S 1320 to S 1340 in the method 1300.

The apparatus 2000 includes: the transceiver unit 2010, configured to receive a first message from a first device, where the first message includes second node information, and the second node information indicates a second node; and the processing unit 2020, configured to: determine the second node based on the second node information, generate a security key between the first node and the second node, and communicate with the second node based on the security key.

In some possible implementations, the processing unit 2020 is specifically configured to: when the second node stores first node information indicating the first node, generate, by the first node, the security key based on the second node information, where the security key is used for session encryption between the first node and the second node.

In some possible implementations, the processing unit 2020 is further configured to: generate a first random number; and generate the security key based on the first random number and the second node information.

In some possible implementations, the processing unit 2020 is further configured to: generate a second random number; and generate a first public key based on the first random number. The transceiver unit 2010 is further configured to: send the second random number and the first public key to the second node; and receive a first encrypted value, where the first encrypted value is obtained by the second node by encrypting the second random number based on a first security key, and the first security key is generated based on a key of the second node and the first public key. The processing unit 2020 is further configured to: decrypt the first encrypted value based on the security key, and store the security key when the first encrypted value is successfully decrypted.

In some possible implementations, the processing unit 2020 is further configured to: generate a third random number; and generate a second public key based on the third random number. The transceiver unit 2010 is further configured to send a first signature generated based on a private key of the first node and the second public key to the second node; receive a second signature, where the second signature is generated based on a private key of the second node and a third public key after the second node successfully verifies the first signature, and the third public key is generated based on a fourth random number generated by the second node. The processing unit is further configured to: verify the second signature based on the second node information; and when the second signature is successfully verified, generate, by the first node, the security key based on the third public key and the third random number.

In some possible implementations, the transceiver unit 2010 is further configured to receive, from the first device, third node information indicating a third node and information indicating that the second node and the third node need to communicate. The processing unit 2020 is further configured to: generate a fifth random number; generate a fourth public key based on the fifth random number and the second node information; and generate a fifth public key based on the fifth random number and the third node information. The transceiver unit 2010 is further configured to: send the fifth public key to the second node; and send the fourth public key to the third node.

In some possible implementations, the transceiver unit 2010 is further configured to: before receiving the first message, send a signed public key of the first node to the second device, where the signed public key of the first node is used to generate the first message.

In some possible implementations, the second node information includes public key information of the second node.

In some possible implementations, the public key information of the second node includes at least one of the following: a public key signature certificate of the second node, a public key signature certificate identity ID of the second node, and a hash value of a public key of the second node and identity information of the second node.

In some possible implementations, the transceiver unit 2010 is further configured to receive service information of the second node from the first device, where the service information of the second node indicates a service that is in the second node and that can be accessed by the first node.

In some possible implementations, the security key includes at least one of the following: a pre-shared key, a diagnostic key, a security onboard communication SecOC key, and another application key.

In some possible implementations, the processing unit 2020 is further configured to generate a trust token. The transceiver unit 2010 is further configured to send the trust token to a fourth node. The processing unit 2020 is further configured to: generate a sixth random number; and generate a second security key based on the trust token and the sixth random number. The transceiver unit 2010 is further configured to send the second security key encrypted by using the trust token to the fourth node, so that the fourth node performs decryption based on the trust token prestored by the fourth node to obtain the second security key, where the second security key is used for session encryption between the first node and the fourth node.

In some possible implementations, the processing unit 2020 is further configured to: before the transceiver unit 2010 sends the trust token to the fourth node, perform authentication on the fourth node based on at least one of a serial number SN, a physical fingerprint, an authentication chip, or a security chip of the fourth node. The transceiver unit 2010 is specifically configured to send the trust token to the fourth node when the authentication succeeds.

In some possible implementations, the processing unit 2020 is further configured to: perform identity authentication on the fourth node based on the second security key; and delete the trust token when the identity authentication succeeds.

The apparatus 2000 may be further configured to perform the method in FIG. 14. When the apparatus 2000 is configured to perform the method 1400 in FIG. 14, the transceiver unit 2010 may be configured to perform S1410 and S1420 in the method 1400.

The apparatus 2000 includes: the transceiver unit 2010, configured to: receive a first message sent by a first device, where the first message includes second node information, and the second node information indicates a second node; and send the first message to a first node.

In some possible implementations, the apparatus 2000 further includes the processing unit, configured to: before the transceiver unit receives the first message sent by the first device, generate a second message based on a signed public key of the second node and a communication list, where the communication list indicates that the first node and the second node need to communicate; and the transceiver unit 2010 is further configured to send the second message to the first device.

The apparatus 2000 may be further configured to perform the method in FIG. 15. When the apparatus 2000 is configured to perform the method 1500 in FIG. 15, the transceiver unit 2010 may be configured to perform S1510 and S1530 in the method 1500, and the processing unit 2020 may be configured to perform S1520 in the method 1500.

The apparatus 2000 includes: the transceiver unit 2010, configured to receive a second message sent by a second device; and the processing unit 2020, configured to sign the second message to generate a first message. The transceiver unit 2010 is further configured to send the first message to a first node.

The apparatus 2000 may be further configured to perform the method in FIG. 16. When the apparatus 2000 is configured to perform the method 1600 in FIG. 16, the transceiver unit 2010 may be configured to perform S1610 and S1620 in the method 1600.

The apparatus 2000 includes: the transceiver unit 2010, configured to: receive a first message sent by a first device, where the first message includes second node information, and the second node information indicates a second node; and send the first message to a first node.

In some possible implementations, the transceiver unit 2010 is further configured to: receive a signed public key of the first node sent by a third device; and send the signed public key of the first node to the first node.

The apparatus 2000 may be further configured to perform the method in FIG. 17. When the apparatus 2000 is configured to perform the method 1700 in FIG. 17, the transceiver unit 2010 may be configured to perform S1710 in the method 1700, and the processing unit 2020 may be configured to perform S 1720 in the method 1700.

The apparatus 2000 includes: the transceiver unit 2010, configured to receive a first public key, where the first public key is generated by a first node based on a first message, the first message includes second node information, and the second node information indicates the second node; and the processing unit 2020, configured to generate a security key based on the first public key, where the security key is used for session encryption between the first node and the second node, or the security key is used for session encryption between the second node and a third node.

In some possible implementations, the first public key is a public key signed by using a private key of the first node, and the processing unit 2020 is further configured to: determine a public key of the first node based on the first message; verify the first public key based on the public key of the first node; generate a fifth random number; and generate the security key based on the first public key and the fifth random number when the verification succeeds.

In some possible implementations, the apparatus 2000 may be further configured to perform the method 2500 or the method 2600.

When the apparatus 2000 is configured to perform the method 2500 in FIG. 25, the processing unit 2020 may be configured to perform S2510 in the method 2500, and the transceiver unit 2010 may be configured to perform S2520 in the method 2500.

Specifically, the processing unit 2020 is configured to generate a first message, where the first message includes second node information, and the second node information indicates a second node; and the transceiver unit 2010 is configured to send the first message to a first node.

Optionally, the transceiver unit 2010 is further configured to: send a public key of the fourth device to a fifth device, where the public key of the fourth device is used to generate an encrypted proxy signed private key; and receive the encrypted proxy signed private key.

Optionally, the processing unit 2020 is further configured to: generate a second message based on a signed public key of the second node and a communication list, where the communication list indicates that the first node and the second node need to communicate; and sign the second message to generate the first message.

Optionally, the processing unit 2020 is configured to decrypt the encrypted proxy signed private key by using the public key of the fourth device, to obtain a proxy signed private key; and the processing unit is configured to sign, by the fourth device, the second message by using the proxy signed private key, to generate the first message.

Optionally, the transceiver unit 2010 is further configured to: receive a first signal from an electrical inspection device; and send request information to the second node based on the first signal, where the request information is used to request the signed public key of the second node.

When the apparatus 2000 is configured to perform the method 2600 in FIG. 26, the transceiver unit 2010 may be configured to perform S2610 and S2630 in the method 2600, and the processing unit 2020 may be configured to perform S2620 in the method 2600.

Specifically, the transceiver unit 2010 is configured to receive a public key of a fourth device sent by the fourth device; the processing unit 2020 is configured to generate an encrypted proxy signed private key based on the public key of the fourth device, where the encrypted proxy signed private key is used to generate a first message, the first message includes second node information, and the second node information is used to generate a security key between a first node and ta second node; and the transceiver unit 2010 is further configured to send the encrypted proxy signed private key to the fourth device.

It should be understood that division of units in the apparatus is merely logical function division, and can be fully or partially integrated into a physical entity in actual implementation, or physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or functions of the units in the apparatus. The processor is, for example, a general-purpose processor like a CPU or a microprocessor, and the memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the units are implemented by designing a logical relationship between elements in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement functions of some or all of the units. All the units of the apparatus may be implemented in a form of software invoked by a processor, or may be implemented in a form of a hardware circuit. Alternatively, some of the units are implemented in a form of software invoked by a processor, and the remaining units are implemented in a form of a hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of a hardware circuit, and the logical relationship of the hardware circuit is fixed or reconfigurable. For example, the processor is an ASIC or a hardware circuit implemented by a PLD, for example, an FPGA. In a reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be learned that the units in the apparatus may be configured as one or more processors (or processing circuits) for implementing the foregoing methods, for example, CPUs, GPUs, NPUs, TPUs, DPUs, microprocessors, DSPs, ASICs, FPGAs, or a combination of at least two of these processor forms.

In addition, all or some of the units in the apparatus may be integrated, or may be implemented independently. In an implementation, these units are integrated together and implemented in a form of a system-on-a-chip (system-on-a-chip, SOC). The SOC may include at least one processor, configured to implement any one of the methods or implement the functions of the units of the apparatus. Types of the at least one processor may be different, for example, include a CPU and an FPGA, a CPU and an artificial intelligence processor, or a CPU and a GPU.

FIG. 19 is a block diagram of a communication apparatus according to an embodiment of this application. The communication apparatus 2100 shown in FIG. 19 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, so that the transceiver 2120 receives/sends some parameters. Optionally, the memory 2130 may be coupled to the processor 2110 through an interface, or may be integrated with the processor 2110.

It should be noted that the transceiver 2120 may include but not limited to a transceiver apparatus like an input/output interface (input/output interface), to implement communication between the apparatus 2100 and another device or a communication network.

In an implementation process, the steps of the foregoing methods may be implemented by using an integrated logic circuit of hardware in the processor 2110 or instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 2130. The processor 2110 reads information in the memory 2130, and completes the steps of the methods in combination with hardware of the processor. To avoid repetition, details are not described herein again.

The processor 2110 may be a general-purpose CPU, a microprocessor, an ASIC, a GPU, or one or more integrated circuits, and is configured to execute a related program, to implement the communication methods in the method embodiments of this application. The processor 2110 may alternatively be an integrated circuit chip and has a signal processing capability. In a specific implementation process, steps of the communication methods in this application may be completed by using a hardware integrated logic circuit in the processor 2110 or instructions in a form of software. The processor 2110 may alternatively be a general-purpose processor, a DSP, an ASIC, an FPGA or another programmable logic device, a discrete gate or transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 2130. The processor 2110 reads information in the memory 2130, and performs the communication methods in the method embodiments of this application in combination with hardware of the processor.

The memory 2130 may be a read-only memory (read-only memory, ROM), a static storage device, a dynamic storage device, or a random access memory (random access memory, RAM).

The transceiver 2120 uses a transceiver apparatus, for example, but not limited to, a transceiver, to implement communication between the apparatus 2100 and another device or a communication network.

An embodiment of this application further provides a communication system. The system includes the apparatus 2000 or the apparatus 2100.

An embodiment of this application further provides a vehicle. In some possible implementations, the vehicle may include the apparatus 2000 or the apparatus 2100. For example, when the apparatus 2000 (or the apparatus 2100) is an apparatus for performing the method in FIG. 13 or FIG. 17, the vehicle may include the apparatus 2000 (or the apparatus 2100).

An embodiment of this application further provides a terminal device. In some possible implementations, the terminal device may include the apparatus 2000 or the apparatus 2100. For example, when the apparatus 2000 (or the apparatus 2100) is an apparatus for performing the method in FIG. 14, FIG. 15, or FIG. 16, the terminal device may include the apparatus 2000 (or the apparatus 2100).

An embodiment of this application further provides a computer-readable medium, where the computer-readable medium stores program code. When the computer program code is run on a computer, the computer is enabled to perform the methods in FIG. 3 to FIG. 17.

An embodiment of this application further provides a chip, including at least one processor and a memory. The at least one processor is coupled to the memory, and is configured to read and execute instructions in the memory, to perform the methods in FIG. 3 to FIG. 17.

It should be understood that sequence numbers of the processes do not mean execution sequences in various embodiments of this application. The execution sequences of the processes need to be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on an actual requirement to achieve an objective of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first node, a first message from a first device, wherein the first message comprises second node information, and the second node information indicates a second node;
determining, by the first node, the second node based on the second node information;
generating, by the first node, a security key between the first node and the second node; and
communicating, by the first node, with the second node based on the security key.

2. The method according to claim 1, wherein the generating, by the first node, a security key between the first node and the second node comprises:
when the second node stores first node information indicating the first node, generating, by the first node, the security key based on the second node information, wherein the security key is used for session encryption between the first node and the second node.

3. The method according to claim 1 or 2, wherein the method further comprises:
generating, by the first node, a first random number; and
the generating, by the first node, a security key between the first node and the second node comprises:
generating, by the first node, the security key based on the first random number and the second node information.

4. The method according to claim 3, wherein the method further comprises:
generating, by the first node, a second random number;
generating, by the first node, a first public key based on the first random number;
sending, by the first node, the second random number and the first public key to the second node;
receiving, by the first node, a first encrypted value, wherein the first encrypted value is obtained by the second node by encrypting the second random number based on a first security key, and the first security key is generated based on a key of the second node and the first public key;
decrypting, by the first node, the first encrypted value based on the security key; and
storing, by the first node, the security key when the first encrypted value is successfully decrypted.

5. The method according to claim 1 or 2, wherein the method further comprises:
generating, by the first node, a third random number;
generating, by the first node, a second public key based on the third random number;
sending, by the first node, a first signature generated based on a private key of the first node and the second public key to the second node;
receiving, by the first node, a second signature, wherein the second signature is generated based on a private key of the second node and a third public key after the second node successfully verifies the first signature, and the third public key is generated based on a fourth random number generated by the second node; and
verifying, by the first node, the second signature based on the second node information; and
the generating, by the first node, a security key between the first node and the second node comprises:
when the second signature is successfully verified, generating, by the first node, the security key based on the third public key and the third random number.

6. The method according to any one of claims 1 to 5, wherein the method further comprises:
receiving, by the first node from the first device, third node information indicating a third node and information indicating that the second node and the third node need to communicate;
generating, by the first node, a fifth random number;
generating, by the first node, a fourth public key based on the fifth random number and the second node information;
generating, by the first node, a fifth public key based on the fifth random number and the third node information;
sending, by the first node, the fifth public key to the second node; and
sending, by the first node, the fourth public key to the third node.

7. The method according to any one of claims 1 to 6, wherein before the receiving, by a first node, a first message, the method further comprises:
sending, by the first node, a signed public key of the first node to a second device, wherein the signed public key of the first node is used to generate the first message.

8. The method according to any one of claims 1 to 7, wherein before the receiving, by a first node, a first message, the method further comprises:
sending, by the first node, the signed public key of the first node to a fourth device, wherein the signed public key of the first node is used to generate the first message.

9. The method according to any one of claims 1 to 8, wherein the second node information comprises public key information of the second node.

10. The method according to claim 9, wherein the public key information of the second node comprises at least one of the following:
a public key signature certificate of the second node;
a public key signature certificate identity ID of the second node; and
a hash value of a public key of the second node and identity information of the second node.

11. The method according to any one of claims 1 to 10, wherein the method further comprises:
receiving, by the first node, service information of the second node from the first device, wherein the service information of the second node indicates a service that is in the second node and that can be accessed by the first node.

12. The method according to any one of claims 1 to 11, wherein the security key comprises at least one of the following: a pre-shared key, a diagnostic key, a security onboard communication SecOC key, and another application key.

13. The method according to any one of claims 1 to 12, wherein the method further comprises:
generating, by the first node, a trust token;
sending, by the first node, the trust token to a fourth node;
generating, by the first node, a sixth random number;
generating, by the first node, a second security key based on the trust token and the sixth random number; and
sending, by the first node, the second security key encrypted by using the trust token to the fourth node, so that the fourth node performs decryption based on the trust token prestored by the fourth node to obtain the second security key, wherein the second security key is used for session encryption between the first node and the fourth node.

14. The method according to claim 13, wherein before the sending, by the first node, the trust token to a fourth node, the method further comprises:
performing, by the first node, authentication on the fourth node based on at least one of a serial number SN, a physical fingerprint, an authentication chip, or a security chip of the fourth node; and
the sending, by the first node, the trust token to a fourth node comprises:
sending, by the first node, the trust token to the fourth node when the authentication succeeds.

15. The method according to claim 13 or 14, wherein the method further comprises:
performing, by the first node, identity authentication on the fourth node based on the second security key; and
deleting, by the first node, the trust token when the identity authentication succeeds.

16. A communication method, comprising:
receiving, by a second device, a first message sent by a first device, wherein the first message comprises second node information, and the second node information indicates a second node; and
sending, by the second device, the first message to a first node.

17. The method according to claim 16, wherein before the receiving, by a second device, a first message sent by a first device, the method further comprises:
generating, by the second device, a second message based on a signed public key of the second node and a communication list, wherein the communication list indicates that the first node and the second node need to communicate; and
sending, by the second device, the second message to the first device.

18. The method according to claim 16, wherein the second device is an electrical inspection device, and the method further comprises:
receiving, by the second device, a signed public key of the first node sent by a third device; and
sending, by the second device, the signed public key of the first node to the first node.

19. A communication method, comprising:
receiving, by a first device, a second message sent by a second device;
signing, by the first device, the second message to generate a first message; and
sending, by the first device, the first message to a first node.

20. A communication method, comprising:
receiving, by a second node, a first public key, wherein the first public key is generated by a first node based on a first message, the first message comprises second node information, and the second node information indicates the second node; and
generating, by the second node, a security key based on the first public key, wherein the security key is used for session encryption between the first node and the second node; or the security key is used for session encryption between the second node and a third node.

21. The method according to claim 20, wherein the first public key is a public key signed by using a private key of the first node, and the method further comprises:
determining, by the second node, a public key of the first node based on the first message;
verifying, by the second node, the first public key based on the public key of the first node; and
generating, by the second node, a fifth random number; and
the generating, by the second node, a security key based on the first public key comprises:
generating, by the second node, the security key based on the first public key and the fifth random number when the verification succeeds.

22. A first node, comprising:
a transceiver unit, configured to receive a first message from a first device, wherein the first message comprises second node information, and the second node information indicates a second node; and
a processing unit, configured to: determine the second node based on the second node information;
generate a security key between the first node and the second node; and
communicate with the second node based on the security key.

23. The first node according to claim 22, wherein the processing unit is configured to:
when the second node stores first node information indicating the first node, generate, by the first node, the security key based on the second node information, wherein the security key is used for session encryption between the first node and the second node.

24. The first node according to claim 22 or 23, wherein the processing unit is further configured to:
generate a first random number; and
generate the security key based on the first random number and the second node information.

25. The first node according to claim 24, wherein the processing unit is further configured to:
generate a second random number, and
generate a first public key based on the first random number;
the transceiver unit is further configured to: send the second random number and the first public key to the second node, and
receive a first encrypted value, wherein the first encrypted value is obtained by the second node by encrypting the second random number based on a first security key, and the first security key is generated based on a key of the second node and the first public key; and
the processing unit is further configured to: decrypt the first encrypted value based on the security key, and
store the security key when the first encrypted value is successfully decrypted.

26. The first node according to claim 22 or 23, wherein the processing unit is further configured to:
generate a third random number, and
generate a second public key based on the third random number;
the transceiver unit is further configured to: send a first signature generated based on a private key of the first node and the second public key to the second node, and
receive a second signature, wherein the second signature is generated based on a private key of the second node and a third public key after the second node successfully verifies the first signature, and the third public key is generated based on a fourth random number generated by the second node; and
the processing unit is further configured to: verify the second signature based on the second node information, and
when the second signature is successfully verified, generate, by the first node, the security key based on the third public key and the third random number.

27. The first node according to any one of claims 22 to 26, wherein the transceiver unit is further configured to:
receive, from the first device, third node information indicating a third node and information indicating that the second node and the third node need to communicate;
the processing unit is further configured to: generate a fifth random number,
generate a fourth public key based on the fifth random number and the second node information, and
generate a fifth public key based on the fifth random number and the third node information; and
the transceiver unit is further configured to: send the fifth public key to the second node, and
send the fourth public key to the third node.

28. The first node according to any one of claims 22 to 27, wherein the transceiver unit is further configured to:
before receiving the first message, send a signed public key of the first node to a second device, wherein the signed public key of the first node is used to generate the first message.

29. The first node according to any one of claims 22 to 28, wherein the transceiver unit is further configured to:
send the signed public key of the first node to a fourth device, wherein the signed public key of the first node is used to generate the first message.

30. The first node according to any one of claims 22 to 29, wherein the second node information comprises public key information of the second node.

31. The first node according to claim 30, wherein the public key information of the second node comprises at least one of the following:
a public key signature certificate of the second node;
a public key signature certificate identity ID of the second node; and
a hash value of a public key of the second node and identity information of the second node.

32. The first node according to any one of claims 22 to 31, wherein the transceiver unit is further configured to:
receive service information of the second node from the first device, wherein the service information of the second node indicates a service that is in the second node and that can be accessed by the first node.

33. The first node according to any one of claims 22 to 32, wherein the security key comprises at least one of the following: a pre-shared key, a diagnostic key, a security onboard communication SecOC key, and another application key.

34. The first node according to any one of claims 22 to 33, wherein the processing unit is further configured to:
generate a trust token;
the transceiver unit is further configured to send the trust token to a fourth node;
the processing unit is further configured to: generate a sixth random number, and
generate a second security key based on the trust token and the sixth random number; and
the transceiver unit is further configured to send the second security key encrypted by using the trust token to the fourth node, so that the fourth node performs decryption based on the trust token prestored by the fourth node to obtain the second security key, wherein the second security key is used for session encryption between the first node and the fourth node.

35. The first node according to claim 34, wherein the processing unit is further configured to:
before the transceiver unit sends the trust token to the fourth node, perform authentication on the fourth node based on at least one of a serial number SN, a physical fingerprint, an authentication chip, or a security chip of the fourth node; and
the transceiver unit is configured to send the trust token to the fourth node when the authentication succeeds.

36. The first node according to claim 34 or 35, wherein the processing unit is further configured to:
perform identity authentication on the fourth node based on the second security key; and
delete the trust token when the identity authentication succeeds.

37. A second device, comprising:
a transceiver unit, configured to: receive a first message sent by a first device, wherein the first message comprises second node information, and the second node information indicates a second node; and
send the first message to a first node.

38. The second device according to claim 37, wherein the second device further comprises a processing unit, configured to:
before the transceiver unit receives the first message sent by the first device, generate a second message based on a signed public key of the second node and a communication list, wherein the communication list indicates that the first node and the second node need to communicate; and
the transceiver unit is further configured to send the second message to the first device.

39. The second device according to claim 37, wherein when the second device is an electrical inspection device, the transceiver unit is further configured to:
receive a signed public key of the first node sent by a third device; and
send the signed public key of the first node to the first node.

40. A first device, comprising:
a transceiver unit, configured to receive a second message sent by a second device; and
a processing unit, configured to sign the second message to generate a first message, wherein
the transceiver unit is further configured to send the first message to a first node.

41. A second node, comprising:
a transceiver unit, configured to receive a first public key, wherein the first public key is generated by a first node based on a first message, the first message comprises second node information, and the second node information indicates the second node; and
a processing unit, configured to generate a security key based on the first public key, wherein the security key is used for session encryption between the first node and the second node; or the security key is used for session encryption between the second node and a third node.

42. The second node according to claim 41, wherein the first public key is a public key signed by using a private key of the first node, and the processing unit is further configured to:
determine a public key of the first node based on the first message;
verify the first public key based on the public key of the first node;
generate a fifth random number; and
generate the security key by using the first public key and the fifth random number when the verification succeeds.

43. A communication apparatus, comprising:
a memory, configured to store a computer program; and
a processor, configured to execute the computer program stored in the memory, so that the apparatus performs the method according to any one of claims 1 to 15, or the method according to claim 20 or 21.

44. A communication apparatus, comprising:
a memory, configured to store a computer program; and
a processor, configured to execute the computer program stored in the memory, so that the apparatus performs the method according to any one of claims 16 to 19.

45. A communication system, wherein the system comprises the first node according to any one of claims 22 to 36 and the second node according to claim 41 or 42.

46. The system according to claim 45, wherein the first node generates a first random number, and generates a security key based on the first random number and second node information, wherein the second node information indicates the second node;
the first node generates a first public key based on the first random number;
the first node sends the first public key to the second node;
the second node receives the first public key, generates a first security key based on a private key of the second node and the first public key, and encrypts a second random number based on the first security key to obtain a first encrypted value;
the second node sends the first encrypted value to the first node;
the first node receives the first encrypted value, and decrypts the first encrypted value based on the security key; and
the first node stores the security key when the first node successfully decrypts the first encrypted value.

47. The system according to claim 46, wherein the first node generates a third random number, and generates a second public key based on the third random number;
the first node sends a first signature generated based on a private key of the first node and the second public key to the second node;
the second node receives the first signature, generates a fourth random number, and generates a third public key based on the fourth random number; and when the first signature is successfully verified, the second node generates a second signature based on the private key of the second node and the third public key, and sends the second signature to the first node;
the second node generates a third security key based on the fourth random number and the second public key; and
the first node receives the second signature, verifies the second signature based on the second node information, and when the second signature is successfully verified, generates a fourth security key based on the third public key and the third random number.

48. The system according to any one of claims 45 to 47, wherein the system further comprises the first device according to claim 40, and the second node comprises a first apparatus and a second apparatus;
the first node receives, from the first device, first apparatus information indicating the first apparatus, second apparatus information indicating the second apparatus, and information indicating that the first apparatus and the second apparatus need to communicate;
the first node generates a fifth random number;
the first node generates a fourth public key based on the fifth random number and the first apparatus information;
the first node generates a fifth public key based on the fifth random number and the second apparatus information;
the first node sends the fifth public key to the first apparatus;
the first node sends the fourth public key to the second apparatus;
the first apparatus receives the fifth public key, and generates a fifth security key based on a private key of the first apparatus and the fifth public key; and
the second apparatus receives the fourth public key, and generates a sixth security key based on a private key of the second apparatus and the fourth public key.

49. A vehicle, comprising the first node according to any one of claims 22 to 36, and/or the second node according to either of claims 41 and 42, and/or the communication apparatus according to claim 43.

50. A terminal device, comprising the second device according to claims 37 to 9, the first device according to claim 40, or the communication apparatus according to claim 44.

51. A computer-readable storage medium, wherein the computer-readable storage medium stores a computer program, and when the computer program is executed by a computer, the method according to any one of claims 1 to 21 is implemented.

52. A chip, wherein the chip comprises a processor and a data interface, and the processor reads, through the data interface, instructions stored in a memory, to perform the method according to any one of claims 1 to 21.

53. A communication method, comprising:
generating, by a fourth device, a first message, wherein the first message comprises second node information, and the second node information indicates a second node; and
sending, by the fourth device, the first message to a first node.

54. The method according to claim 53, wherein the method further comprises:
sending, by the fourth device, a public key of the fourth device to a fifth device, wherein the public key of the fourth device is used to generate an encrypted proxy signed private key; and
receiving, by the fourth device, the encrypted proxy signed private key.

55. The method according to claim 54, wherein the method further comprises:
generating, by the fourth device, a second message based on a signed public key of the second node and a communication list, wherein the communication list indicates that the first node and the second node need to communicate; and
the generating, by a fourth device, a first message comprises:
signing, by the fourth device, the second message to generate the first message.

56. The method according to claim 55, wherein the method further comprises:
decrypting, by the fourth device, the encrypted proxy signed private key by using the public key of the fourth device, to obtain a proxy signed private key; and
the signing, by the fourth device, the second message to generate the first message comprises:
signing, by the fourth device, the second message by using the proxy signed private key, to generate the first message.

57. The method according to claim 55 or 56, wherein the method further comprises:
receiving, by the fourth device, a first signal from an electrical inspection device; and
sending, by the fourth device, request information to the second node based on the first signal, wherein the request information is used to request the signed public key of the second node.

58. A communication method, comprising:
receiving, by a fifth device, a public key of a fourth device sent by the fourth device;
generating, by the fifth device, an encrypted proxy signed private key based on the public key of the fourth device, wherein the encrypted proxy signed private key is used to generate a first message, the first message comprises second node information, and the second node information is used to generate a security key between a first node and a second node; and
sending, by the fifth device, the encrypted proxy signed private key to the fourth device.

59. A fourth device, comprising:
a processing unit, configured to generate a first message, wherein the first message comprises second node information, and the second node information indicates a second node; and
a transceiver unit, configured to send the first message to a first node.

60. The fourth device according to claim 59, wherein the transceiver unit is further configured to:
send a public key of the fourth device to a fifth device, wherein the public key of the fourth device is used to generate an encrypted proxy signed private key; and
receive the encrypted proxy signed private key.

61. The fourth device according to claim 60, wherein the processing unit is further configured to:
generate a second message based on a signed public key of the second node and a communication list, wherein the communication list indicates that the first node and the second node need to communicate; and
sign the second message to generate the first message.

62. The fourth device according to claim 61, wherein the processing unit is configured to:
decrypt the encrypted proxy signed private key by using the public key of the fourth device, to obtain a proxy signed private key; and
the processing unit is configured to:
sign, by the fourth device, the second message by using the proxy signed private key, to generate the first message.

63. The method according to claim 61 or 62, wherein the transceiver unit is further configured to:
receive a first signal from an electrical inspection device; and
send request information to the second node based on the first signal, wherein the request information is used to request the signed public key of the second node.

64. A fifth device, comprising:
a transceiver unit, configured to receive a public key of a fourth device sent by the fourth device; and
a processing unit, configured to generate an encrypted proxy signed private key based on the public key of the fourth device, wherein the encrypted proxy signed private key is used to generate a first message, the first message comprises second node information, and the second node information is used to generate a security key between a first node and a second node, wherein
the transceiver unit is further configured to send the encrypted proxy signed private key to the fourth device.
